# EUROPEAN PATENT SPECIFICATION

(11) **EP 2 788 938 B1**
(45) Date of publication and mention of the grant of the patent: **22.05.2019**
(21) Application number: 12855577.8
(22) Date of filing: 04.12.2012
(51) Int. Cl.: H04W 12/06, H04W 4/021, H04L 9/32, G06Q 30/06, H04W 12/10

(54) **NETWORK-ACCESSIBLE POINT-OF-SALE DEVICE INSTANCE**
INSTANZ EINER ÜBER EIN NETZWERK ZUGÄNGLICHEN VERKAUFSPUNKTVORRICHTUNG
INSTANCE DE DISPOSITIF DE POINT DE VENTE ACCESSIBLE AU RÉSEAU

(30) Priority: 07.12.2011 US 201113313912; 14.02.2012 US 201213372822
(43) Date of publication of application: 15.10.2014
(73) Proprietor: Amazon Technologies, Inc., Reno, NV 89507 (US)
(72) Inventor: HITCHOCK, Daniel, Seattle, WA 98109-5210 (US); RAMALINGHAM, Harsha, Seattle, WA 98109-5210 (US); CANAVOR, Darren, E., Seattle, WA 98109-5210 (US); HANSON, Robert, Seattle, WA 98109-5210 (US); CAMPBELL, Brad, Lee, Seattle, WA 98109-5210 (US)
(74) Representative: Blake, Stephen James
(86) International application number: PCT/US2012/067785
(87) International publication number: WO 2013/085915

(56) References cited:
- WO-A1-2010/141656
- US-A1- 2007 084 913
- US-A1- 2008 208 762
- US-A1- 2009 063 312
- US-A1- 2009 240 626
- US-A1- 2010 276 484
- US-A1- 2010 332 339
- US-A1- 2011 246 316
- US-A1- 2011 276 496

## Description

### RELATED APPLICATIONS

This application is a continuation in part of U.S. application Ser. No. 13/313,912 filed on Dec. 7, 2011.

### BACKGROUND

Merchants may wish to receive electronic payments from customers without the expense and inconvenience of establishing the conventional infrastructure necessary to process electronic payments. This need may be particularly acute among small and medium-sized brick-and-mortar merchants. These types of merchants may wish to receive payments in forms other than cash or check, yet may also wish to avoid spending money to purchase a point-of-sale device for processing credit cards and other types of non-cash transactions.

An increasing number of customers have mobile computing devices with network connectivity smart phones, tablet computers, and the like-with them while shopping at brick-and-mortar merchants.

US 2009/240626 A1 discloses a customer initiated payment method using a mobile device.

WO 2010/141656 A1 discloses a mobile shopping decision agent.

US 2008/208762 A1 discloses payments using a mobile commerce device.

US 2010/276484 A1 discloses a staged transaction token for merchant rating.

US 2007/084913 A1 discloses systems and methods for authorising a transaction for a financial account.

### BRIEF DESCRIPTION OF THE DRAWINGS

The detailed description is described with reference to the accompanying figures. In the figures, the left-most digit(s) of a reference number identifies the figure in which the reference number first appears. The use of the same reference numbers in different figures indicates similar or identical items.
Fig. 1 shows an illustrative architecture for using a network-accessible POS device from within a merchant location to make a payment with a mobile computing device.
Fig. 2 shows a diagram of interactions between the mobile computing device, the POS device, the payment processor, and the merchant shown in Fig. 1.
Fig. 3 shows the POS device from Fig. 1 in greater detail.
Fig. 4 shows an illustrative user interface for selecting a good or service from a list.
Fig. 5 shows an illustrative user interface for entering a code corresponding to a good or service.
Fig. 6 shows an illustrative user interface displaying a receipt confirming payment for a selected good or service.
Fig. 7 is a flow diagram of an illustrative process for using a mobile computing device to pay for a good or service through a network-accessible POS device.
Fig. 8 is a flow diagram of an illustrative process for receiving a selection of a good or service from a list displayed on a mobile computing device and providing a receipt to the mobile computing device once payment is confirmed.
Fig. 9 is a flow diagram of an illustrative process for receiving a scan of a tag associated with a good or service from a mobile computing device and providing a receipt to the mobile computing device as well as to the merchant.
Fig. 10 shows another illustrative architecture for using a mobile device of a customer to complete a verified transaction with a merchant.
Fig. 11 shows the merchant account records and the customer account records from Fig. 10 in greater detail.
Fig. 12 shows the network-accessible computing device(s) from in Fig. 10 in greater detail.
Fig. 13 shows the mobile device from Fig. 10 in greater detail.
Fig. 14 shows an illustrative user interface on the mobile device for selecting a merchant.
Fig. 15 shows an illustrative user interface on the mobile device for entering a PIN code.
Fig. 16 shows an illustrative user interface on the mobile device displaying a receipt that includes validation data.
Fig. 17 shows an illustrative user interface on the mobile device displaying a receipt that includes machine-readable validation data.
Fig. 18 shows an illustrative user interface on the mobile device displaying a pending payment and validation tags.
Fig. 19 shows an illustrative user interface on the mobile device displaying a receipt that includes validation data.
Fig. 20 is a flow diagram of an illustrative process for using verification tags and corresponding verification data for a merchant to verify payment made from a mobile device of a customer.

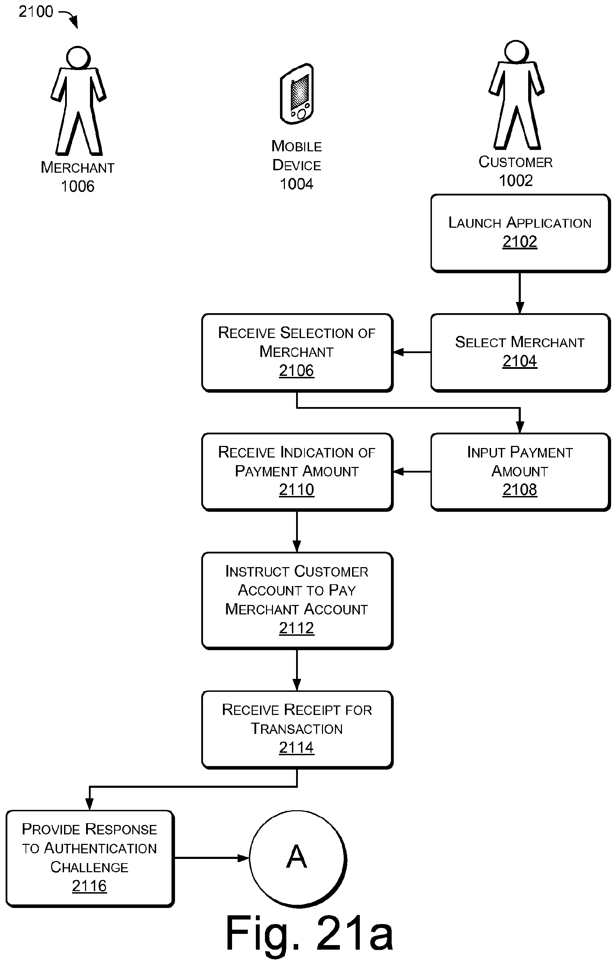

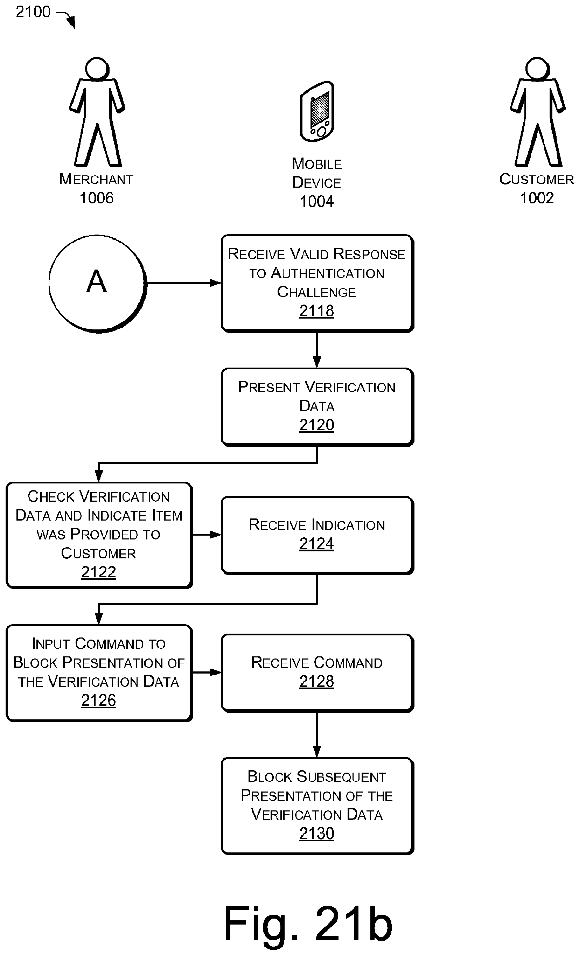

Figs. 21a and 21b are a flow diagram of an illustrative process for using a mobile device of a customer to present verification data to a merchant for a transaction between the customer and the merchant.

### DETAILED DESCRIPTION

"Virtual" or cloud-based point-of-sale (POS) devices are maintained on a network-accessible computing system and made available via a network (e.g., the Internet) to computing devices at a merchant location. The cloud-based POS devices are similar to conventional POS devices that may sit on the counter of a merchant's retail location in that both types of POS devices communicate with payment processing systems such as the various payment processors for credit cards. However, unlike the card readers and other POS device hardware that may be found at a merchant location, cloud-based POS devices are not physically located at the merchant location and do not directly read information from credit cards. This disclosure describes techniques for utilizing cloud-based POS devices in conjunction with other computing devices, such as smart phones, to process in-store purchases without conventional POS device hardware.

Customers shopping at a brick-and-mortar merchant may bring their own mobile computing devices (e.g., smart phones) with them while shopping or, the merchant may lend customers mobile computing devices (e.g., a tablet computer) to use while in the store. When a customer identifies goods and/or services that he or she wishes to purchase, the customer may indicate those goods and/or services on the mobile computing device. For example, the customer may take a picture of a barcode on a good and/or service with a camera in the mobile computing device, may enter a specific code that is associated with the desired good and/or service, may browse through a catalog or a list of available goods and/or services and enter a selection, or may select a good and/or service in any other way. The mobile computing device then sends this information through a network to the cloud-based POS device. Thus, like a conventional cash register, the cloud-based POS device knows which goods and/or services the customer wishes to purchase.

The customer also provides payment information to the cloud-based POS device by using the mobile computing device. For example, the customer may enter a credit card number. If the mobile computing device is associated with the customer, a customer identifier from the mobile computing device may be used to access an online wallet that has stored credit card or other payment information for the customer. The payment information received by the cloud-based POS device is processed similar to payment information received from conventional POS equipment. After the payment information is validated and the cloud-based POS device is informed that the customer has enough money to pay for the desired goods and/or services, the cloud-based POS device generates an electronic receipt.

The electronic receipt provides evidence that a customer has paid for the goods and/or services. This receipt may be sent back to the mobile computing device that the customer used to initiate the purchase or may be sent to a computing device of a merchant. The customer may show this receipt, for example displayed on a screen of the mobile computing device, to the merchant (e.g., an employee working at the store) who then allows the customer to receive the service or take the selected good out of the store. In order to prevent forging receipts when the customer has not actually paid for the good or service, the receipt may include validation data or verification data that the merchant can examine to determine if the receipt is authentic.

Receipts may also be authenticated by providing the receipt to the mobile computing device and to a computing device that the merchant controls at the merchant location for comparison with the receipt sent to the computing device of the customer. If the merchant computing device also receives the receipt from the cloud-based POS device, the merchant can be confident that the receipt presented by the customer is authentic.

Thus, by removing the physical POS devices while still providing a mechanism for verifying payment, the merchant may eliminate checkout lines, avoid purchasing equipment, and gain flexibility. The flexibility may be gained by allowing the merchant to increase or decrease a number of POS devices at a retail location essentially instantaneously by requesting access to additional cloud-based POS device instances. Additionally, flexibility may be created by allowing the merchant to change from one cloud-based POS device provider (e.g., a bank or other financial institution) to a different cloud-based POS device provider simply by changing a contract or business relationship rather than returning one set of hardware devices and obtaining a second, different set of hardware devices.

Validation provided by a backend server or other computer system allows merchants to verify that electronic payment made from a customer's mobile device is in fact a legitimate payment by providing "secret" verification information to the merchant. This secret information may be known or recognizable by the merchant. When this secret information is included on a receipt or confirmation message, this provides the merchant confidence that the receipt is not merely a "mockup" displayed on the customer's mobile device but does in fact represent a payment from the customer to the merchant. As used herein, "merchant" refers to a business that sells goods or services, a person working as an agent for that business such as an owner, employee, or contractor, or a physical location or building in which the business sells the goods or services. "Customer," as used herein refers to a person or other entity that purchases the goods or services sold by the merchant and is a user or owner of the mobile device. "Item" as used herein includes both goods and services of all types. Implementation of the techniques and devices used to provide the merchant confirmation for electronic payments made by a customer's mobile device may be understood in the context of the following illustrative and non-limiting example.

Jim, a customer, is having lunch at a small, local restaurant, a merchant. The owners of the restaurant have chosen not to spend money on payment infrastructure beyond a simple, non-networked cash register. However, out of a desire to provide their customers with greater payment options, the restaurant has established an account with an online service that will process electronic payments from mobile devices and provide verification to the restaurant. To establish this account the restaurant provided "secret" verification data. The owners of the restaurant used a photograph of their child as the verification data. They also provided an authentication challenge to identify themselves as the merchant to a customer's mobile device. The owners of the restaurant selected a four digit personal identification number (PIN) as their authentication challenge. In order to receive money from customers, the restaurant has linked their checking account to their account with the online service.

After he finishes his meal, Jim receives a bill from the restaurant. Here, the bill is a handwritten description of the foods Jim purchased and a total price. Jim launches a payment application on his smart phone and begins to type in the name of the restaurant. A list of merchants with similar names is displayed on the smart phone and Jim selects this restaurant from the list. The application on Jim's smart phone is communicating with the same on-line service with which the merchant has established an account. Thus, Jim's selection of the restaurant name from the list is provided to the on-line service and this allows the on-line service to associate the restaurant with this transaction.

Jim reads his bill and enters the charge from the bill, plus a tip, as the payment amount for this transaction. Jim has also previously created an account with the same online service, and Jim's account is linked to his credit card. The online service associates Jim with the transaction by his mobile device. Thus, the online service has now connected this transaction with a merchant, a customer, and a payment amount.

The online service facilitates a transfer of funds from Jim's credit card to the checking account of the restaurant using appropriate application programming interfaces (APIs) or other communication protocols. Once the online service receives confirmation that the payment amount was successfully deposited in the merchant's checking account, the online service sends a receipt including the payment amount and the picture of the restaurant owners' child to Jim's smart phone. Jim receives a payment confirmation message along with instructions to provide his smart phone to an employee of the restaurant.

One of the restaurant owners momentarily borrows Jim's phone when he or she comes to collect the bill and enters a PIN. The message from the online service has encrypted or otherwise concealed the picture of the child so that it is shown only when the correct PIN is entered. Thus, Jim cannot view of the "secret" verification data. The restaurant owner recognizes the picture of the child and sees that the payment amount is sufficient to cover the bill. Now the restaurant owner can feel assured that Jim has paid for his meal and not simply displayed a fake receipt on his smart phone. The restaurant owner selects a button on the smart phone to acknowledge that payment and delete the picture of the child from the smart phone. Therefore, even if Jim were able to later guess the pin or break the encryption, the verification data-the picture of the child-is no longer available on his smart phone. Jim must submit another payment in order to once again receive the picture of the child from the online service. The restaurant owner thanks Jim for his patronage and returns his phone.

At the end of the day the owners of the restaurant access their computer and review the electronic payments they have received from mobile devices of customers throughout the day. Both the owners and customers like Jim are pleased by the convenience with which they can make and receive electronic payments at the restaurant. To provide additional security, in case one of the customers may have somehow copied the image of the child and may try to use it in a fake receipt in the future, the owners of the restaurant change the verification data for tomorrow by uploading a picture of their dog to the online service and specifying that the dog's picture is now the verification data. It is difficult to remember multiple PINs, so the owners of the restaurant do not change the PIN tonight, but they do update their authentication challenge with the online service about once a month by selecting a different PIN.

Example implementations and context are provided with reference to the following figures, as described below in more detail. It is to be appreciated, however, that the following implementations and contexts illustrative of many possible implementations and contexts.

### Illustrative Architecture and Operation

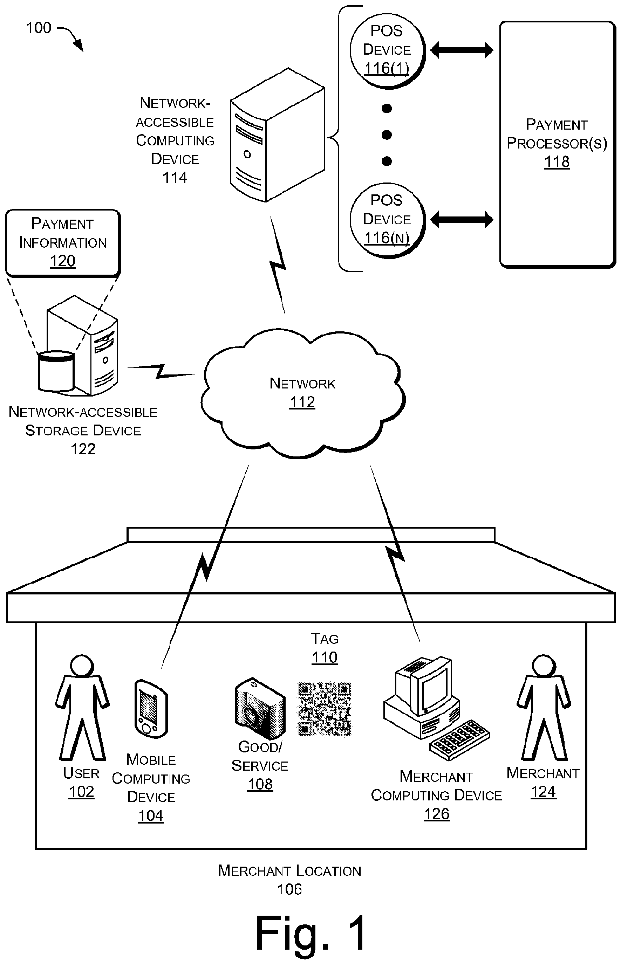

Fig. 1 shows an illustrative architecture 100 in which a user 102 (i.e., a customer) employs a mobile computing device 104 while at a merchant location 106 to purchase a good and/or service 108. The mobile computing device 104 may be implemented as any number of mobile devices, including but not limited to a mobile phone (e.g., with telephone and SMS messaging), a smart phone (e.g., with functionality to access the Internet, a mobile web, or the like), a personal digital assistant (PDA), a laptop computer, a net book, an eBook reader, a personal media player (PMP), a portable gaming system, and so forth.

Here, the good or service 108 is shown as a camera representing, for example, the camera itself (i.e., a good) or photography services (i.e., a service). This architecture 100 may be applied equally well for the purchase of any good and/or service as well as for the purchase of multiple goods and/or services. The good and/or service 108 may be associated with a tag 110 such as a barcode, a QR code, a radio-frequency identification (RFID) tag, or another kind of tag that stores information in graphical, textual, optical, electrical, magnetic, radio-frequency, or other format. The tag 110 may provide information about the good and/or service 108 such as a price, a name, product number, or other identifier of the good and/or service 108.

The user 102 may use the mobile computing device 104 to read the tag 110 in order to provide information about the good and/or service 108 to the mobile computing device 104. However, in alternate implementations the user 102 may type in a code that is associated with the good and/or service 108 and the mobile computing device 104 may use this code to obtain information about the good and/or service 108. In alternate implementations, the user 102 may browse through a list or catalog of goods and/or services 108 on the mobile computing device 104 and select the one he or she wishes to purchase from the list.

This information may be provided from the mobile computing device 104 via a network 112 to a network-accessible computing device 114 that contains one or more instances of cloud-based POS devices 116(1) - 116(n). The network 112 may include any one or combination of multiple different types of networks, such as cable networks, local area networks, personal area networks, wide area networks, the Internet, wireless networks, ad hoc networks, mesh networks, and/or the like. The mobile computing device 104 may access the network 112 through a wired or wireless connection such as a connection using radio signals (e.g., Wi-Fi, Bluetooth®, 3G network, 4G network, etc.).

The network-accessible computing device 114 may be, for example, a server computer. Each of the multiple instances of the cloud-based POS devices 116(1) - 116(n) may correspond to a "virtual" representation of a single piece of hardware that functions as a POS device. Thus, the cloud-based POS devices 116(1) - 116(n) may each be uniquely and specifically assigned to a pre-specified merchant location 106 and each may exchange information with one or more payment processors 118. The number of POS device instances may be varied based on the capabilities of the network-accessible computing device 114 and the demands of merchants using these cloud-based POS devices 116. Thus, additional instances of a cloud-based POS device 116 may be rapidly brought online by modifying hardware and/or software of the network-accessible computing device 114.

The payment processors 118 may be accessed over a public network such as the Internet or a private or limited-access network that provides access to one or more gateway providers for processing and routing payments to the appropriate payment processor based on the type of payment. This may be similar or identical to the system that supports conventional POS devices by routing, for example, Visa® charges to the bank that issued the credit card, Discover® charges to the Discover® payment processor, and the like. Information may be sent to the payment processor 118 using specific application programming interfaces (APIs) associated with each of the payment processors 118. For example, the APIs for submitting Visa® charges may be different than the APIs for submitting Master Card® charges. Thus, the payment processor 118 and the corresponding APIs may be identified by the form of payment. After the payments are reconciled against the appropriate one of the payment processors 118, the one of the cloud-based POS devices 116(1) - 116(n), hereinafter referred to as POS device 116, that is linked to the merchant location 106 may receive a response such as an indication that the transaction is authorized or declined.

The POS devices 116 may also be used to track cash transactions. The merchant 124 may enter cash transactions into the merchant computing device 126 which communicates the transaction information to one of the POS devices 116 via the network 112. In this case, communication between the POS device 116 and the payment processors 118 is not necessary since payment was made in cash. However, use of the POS device 116 to record all transactions including cash transactions may provide unified accounting and inventory management functionality similar to that of conventional hardware POS devices.

In some implementations, the mobile computing device 104 may be location aware, or is able to provide information to another entity (e.g., a network-accessible server) to allow the other entity to determine a location of the mobile computing device 104. A location on the surface of the earth, or a "geolocation," may be provided to the mobile computing device 104 by a satellite such as a global positioning system (GPS) satellite. Alternatively, wireless signals such as from a radio antenna may be used to determine a geolocation of the mobile computing device 104 relative to a known position of the radio antenna or by triangulation. Other technologies and methods for determining geolocation are also envisioned within the scope of this disclosure such as, for example, calculating geolocation based on a network access point (e.g., Wi-Fi hotspot) or from a locator signal broadcast from a known location such as inside a merchant. The geolocation of the mobile computing device 104 may be used to validate the purchase by confirming that the mobile computing device 104 is located at or near (e.g., within a threshold distance) the merchant location 106 at the time the user 102 attempts to purchase the good and/or service 108.

Payment information 120 of the user 102 may be stored in a memory of the mobile computing device 104 and provided to the POS device 116 via the network 112. Alternatively or additionally, payment information 120 may also be stored in a network-accessible storage device 122 such as an online account or "virtual" wallet. The payment information 120 in the network accessible storage device 122 may be associated with the user 102 by a user identifier (ID) sent from the mobile computing device 104. The user ID may be a combination of a user name and/or password, a serial number of the mobile computing device 104, or some other unique identifier of the user 102.

The merchant 124 at the merchant location 106 represents an employee, contractor, owner, partner, or other person associated with the enterprise operating at the merchant location 106. The merchant 124 may be responsible for confirming that the user 102 receives the good or service 108 only after paying for the good or service 108. The merchant 124 may inspect a receipt sent from the POS device 116 and displayed on the mobile computing device 104 as evidence that the user 102 paid for the good or service 108. A merchant computing device 126 may also receive a receipt from the POS device 116 showing that the user 102 paid for the good or service 108. In some implementations, the receipt received by merchant computing device 126 may be similar or identical to the receipt received by the mobile computing device 104. By comparing the two receipts the merchant 124 can confirm the authenticity of the receipt displayed on the mobile computing device 104 and confirm that the user 102 who actually paid, as opposed to another user, receives the good or service 108. The merchant computing device 126 may be any type of computing device such as a desktop computer, a laptop computer, a tablet computer, a smart phone, a personal digital assistant, and the like.

In summary, shifting POS device functionality to the cloud simplifies operation of the merchant location 106 while providing a mechanism for accepting credit card, debit card, gift card, and other types of payments. The merchant 124 may still choose to maintain tangible equipment for managing sales at the merchant location 106 such as the merchant computing device 126 and/or mobile computing devices 104 that are loaned to customers. However, both the merchant computing device 126 and the mobile computing device 104 may be general purpose computing devices that are adapted to function with this payment system through the use of software (e.g., specialized payment "apps," a standard browser accessing a web-based application, etc.). These types of computing devices may be easier for the merchant to acquire, modify, and maintain than a special purpose POS device.

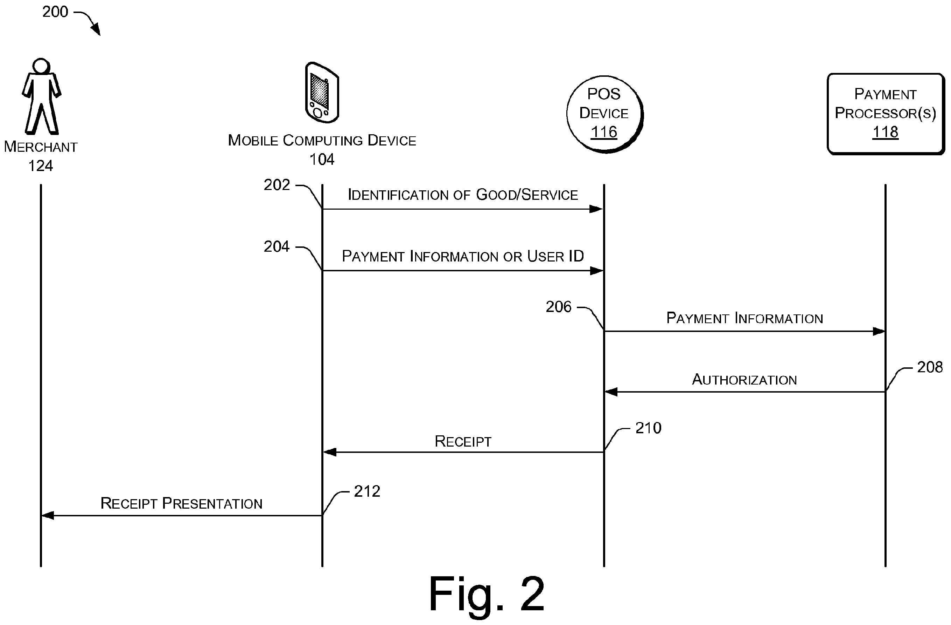

Fig. 2 shows a diagram 200 of interactions between the mobile computing device 104, the POS device 116, the payment processor 118, and the merchant 124 of Fig. 1. At 202, the mobile computing device 104 identifies one or more goods and/or services 108 to the POS device 116. The identification may provided on an item-by-item basis, for example, as a customer moves through a store and puts various items in a shopping cart he or she can also use the mobile computing device 104 to separately indicate each item in turn. The identification may also be provided as a batch, for example, the customer may enter multiple items in the mobile computing device 104 at the same time such as by selecting each of the items in his or her shopping cart from a catalog displayed on the mobile computing device 104.

At 204, payment information is sent to the POS device 116. The payment information may be sent directly from the mobile computing device 104 in response to the user 102 entering the payment information into the mobile computing device 104 or by sending previously stored payment information from a memory of the mobile computing device 104. Alternatively, the mobile computing device 104 may supply a user ID that is associated with payment information available on a network (e.g., web-based user account with associated payment information) and the payment information from network is in turn provided to the POS device 116.

At 206, payment information and an indication of the requested amount of money received by the POS device 116 is in turn forwarded to a payment processor 118. The payment processor 118 may be any type of conventional payment processor that interacts with existing POS device hardware. For example, the payment processor 118 may be a clearinghouse that processes checks or electronic checks, the bank that issued a credit card, a server computer that administers a type of electronic currency, or the like. Once the payment processor 118 receives the payment information, the payment processor 118 may submit the debit for reconciliation from the appropriate account and determine if there are sufficient funds from which to subtract the debit.

At 208, the payment processor 118 may provide authorization to the POS device 116. The authorization may be based on a determination made by the payment processor 118 that an account associated with the payment information 120 has sufficient funds to pay for the good or service 108. The payment processor 118 may also determine that sufficient funds are not available and decline the transaction. Upon receiving an authorization from the payment processor 118, the POS device 116 may generate a receipt for the transaction. Since the POS device 116 is cloud-based rather than a tangible piece of equipment at the merchant location 106, the receipt may be an electronic receipt. The electronic receipt, hereinafter it simply "receipt," may be transmitted through e-mail, SMS, or other electronic communication channels. In some implementations, the POS device 116 or a printer associated with the network-accessible computing device 114 may generate a printed hardcopy receipt. The printed hardcopy receipt may be maintained for auditing purposes and/or later mailed to the merchant and/or customer.

At 210, the POS device 120 provides the receipt to the mobile computing device 104. The POS device 120 may also provide the receipt to the merchant computing device 126. The mobile computing device 104 may store the receipt in memory, display the receipt on a display screen, or otherwise present the receipt to the user 102. For example, the mobile computing device 104 may use output technology other than a display, such as audio, for communicating the receipt to a user.

At 212, the receipt on the mobile computing device 104 is presented to the merchant 124. This may include the user 102 showing the display of the mobile computing device 104 to the merchant 112 as the user 102 leaves the merchant location 106 with the purchased good 108. In some implementations, the merchant 124 may compare the receipt provided by the user 102 with a receipt displayed on the merchant computing device 126.

### Illustrative Point-of-Sale Device

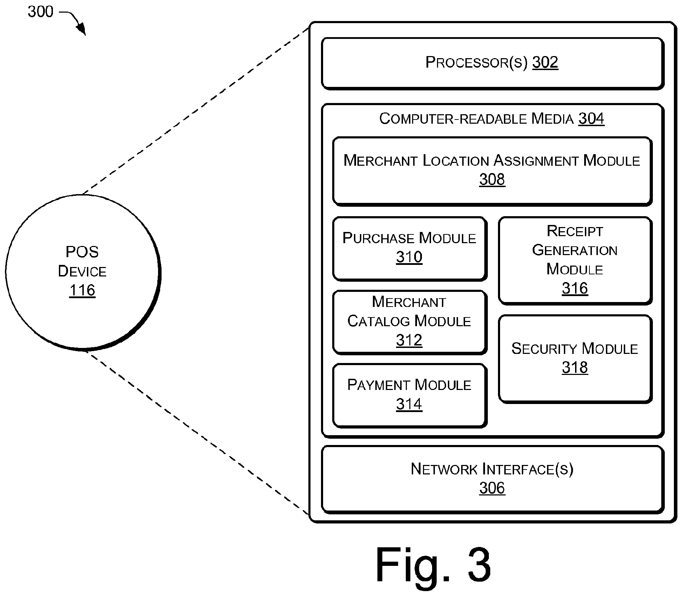

Fig. 3 is a schematic representation of the POS device 116 of Fig. 1. The POS device 116 may be implemented as a "virtual" instance of a POS device on the network-accessible computing device 114. The POS device 116 comprises one or more processors 302 and one or more forms of computer-readable media 304. The computer-readable media 304 may include, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other non-transitory computer-readable medium which can be used to store information and which can be accessed by a processor. The POS device 116 also includes one or more network interfaces 306 for communicating with network 112 and the payment processor 118. The network interfaces 306 may provide network connectivity through any wired or wireless technology such as a phone line, Ethernet, coaxial cable, Bluetooth®, Wi-Fi, or the like.

The memory 304 may contain one or more modules representing computer-executable instructions that may be executed on the one or more processors 302. One illustrative module is a merchant location assignment module 308. The merchant location assignment module 308 associates the POS device 116 with a single merchant location 106 remote from a physical location of the POS device 116. The POS device 116 may be a great distance away from the merchant location 106 and connected by the network 112. However, the merchant location assignment module 308 may exclusively associate the POS device 116 with only the single merchant location 106. Thus, although the architecture 100 shown in Fig. 1 allows great flexibility in assigning the POS device 116 to many different merchants, once assigned the POS device 116 may be linked to a specific merchant location 106 analogous to the association between a tangible POS device located at a checkout counter and the physical location of the store in which the POS device is located. Thus, the cloud-based POS device 116 may be implemented as if it is located "at" a specific merchant location 106. The correlation between the POS device 116 and the merchant location 106 may provide advantages for accounting, inventory management, and the like. Merchants may also receive lower processing fees from payment processors 118 that offer lower fees for on-premise transactions as compared to remote transactions not tied to a location such as purchases made over the Internet or phone.

The flexibility available by providing an instance of a POS device 116 through a network 112 allows for a merchant to increase or decrease the number of POS devices 116 at a merchant location 106 as needed. For example, the merchant may request additional POS devices 116 for its store locations during a holiday shopping season. When the additional POS devices 116 are no longer needed because shopping volumes have decreased, the merchant may release those POS devices 116 for use by other merchants. In some business arrangements with a provider of cloud-based POS devices 116, fees paid by the merchant may be based on the number of POS devices 116 used, so there would be a financial incentive to use additional POS devices 116 only when necessary. Thus, the merchant location assignment module 308 may associate the POS device 116 with the merchant location 106 for a time period based at least in part on a volume of transactions occurring or estimated to occur at the merchant location 106 during the time period. The change in number or capacity of POS devices 116 associated with a merchant location 106 may happen automatically in response to a changing transaction volume. For example, to save POS device fees a merchant may choose to have only one POS device 116 associated with a given merchant location 106, but when transaction volumes at that merchant location 106 approaches the capacity of the POS device 116, an additional POS device 116 may be automatically assigned to that merchant location 106.

The POS devices 116 may also be able to be locked down by the merchant and the merchant may be able to fully configure and control the POS devices 116 while the merchant is using those devices. The merchant location assignment module 308 may also establish a secure connection between the POS device 116 and a merchant network maintained by a merchant operating the merchant location 106 so that the POS device 116 functions as a part of the merchant network. In some implementations, the POS device 116 may therefore be effectively added as a part of a corporate network of the merchant.

A purchase module 310 may receive, via the network connection 306, a purchase request from a customer-operated device, such as the mobile computing device 104, located at the merchant location 106. The purchase request may include payment information 120 and identification of a good or service 108 that a customer wishes to purchase. The payment information may include payment information 120 entered by a user 102 of the customer-operated device at a time of the purchase (e.g., typing in a credit card number), payment information 120 previously stored in a memory of the customer-operated device (e.g., a bank routing number and checking account number stored in a mobile computing device 104), or payment information 120 available via the network 112 (e.g., a merchant gift card account balance) and associated with the customer-operated device by a user identifier stored 120 in a memory of the customer-operated device. Identification of the good or service 108 may be provided by a scan of a tag 110 associated with the good or service 108. The scan may be produced by the customer-operated device using an input or a sensing component of the customer-operated device such as using a camera to take a picture of a barcode or the item, or using an antenna to receive a radio signal from an RFID tag. The picture of the barcode or item may be analyzed using machine vision to find a matching item in the merchant's catalog of goods and/or services. The good or service 108 may also be identified by selection of the good or service 108 from a list displayed on the customer-operated device such as a menu from a restaurant, a catalog of goods or services, and the like. Alternatively, the user 102 of the customer-operated device may enter a code that corresponds to one or more goods and/or services 108.

A merchant catalog module 312 may store all or part of the merchant's catalog of goods and/or services on the POS device 116. The merchant catalog module 312 may include identifying information for each good and/or service in the catalog such as a name, product number, bar code value, or the like. The merchant catalog module 312 may also include a price for goods and/or services in the catalog. The contents of the merchant catalog module 312 may be associated with the merchant location 106 that is assigned to the POS device 116 by the merchant location assignment module 308. The merchant catalog module 312 may also provide inventory accounting by tracking purchases and inventory available at the merchant location 106. In some implementations, the merchant catalog module 312, may be located in whole or part somewhere other than the POS device 116 such as, for example, in the network-accessible storage device 122 shown in Fig. 1.

A payment module 314 may provide payment information to the payment processor 118 and receive an authorization from the payment processor 118 to fulfill the purchase request. The payment module 314 may use encryption similar to or superior to that used by conventional hardware POS devices when transmitting the payment information.

A receipt generation module 316 generates a receipt evidencing the authorization from the payment processor 118. The receipts may also identify the good or service 108. In some implementations, the receipt generation module 316 sends the receipt to the customer-operated device. Thus, the receipt provides confirmation to the user 102 that his or her purchase was successfully completed. As a technique to thwart people who may try to forge receipts without actually paying for the goods or services 108, the receipt may include validation data. The validation data may be based on seed information provided by the merchant associated with the merchant location 106. The seed information itself may be difficult to reverse engineer by examination of the receipt, but the merchant may be able to readily identify absence of the correct seed information by examination of a forged receipt. An additional layer of security to prevent forged receipts may include changing the seed information at a frequency specified by the merchant such as, for example, every hour or every day.

In other implementations, the receipt generation module 316 may send the receipt to the customer-operated device and to a computing device of the merchant 126 at the merchant location 106. Receiving the receipt at the merchant computing device 126 from the POS device 116, rather than through a computing device controlled by a customer, provides an alternative or additional technique for preventing people with forged receipts from receiving goods and/or services 108 without paying.

A security module 318 may receive an indication of a location of the customer-operated device, compare the location of the customer-operated device to the merchant location 106, and when the location of the customer-operated device is more than a threshold distance from the merchant location 106, prevent the customer-operated device from completing a purchase. Requiring correlation between the geolocation of the customer-operated device and the merchant location 106 may prevent fraudulent or mistaken transactions. For example, with this location-based security implemented it may be more difficult for a customer's smart phone to be inadvertently or fraudulently charged for transactions that he or she did not initiate. This technique may also prevent the POS device 116 from receiving incorrect or fraudulent transaction requests sent from computing devices outside of the merchant location 106.

### Illustrative User Interfaces

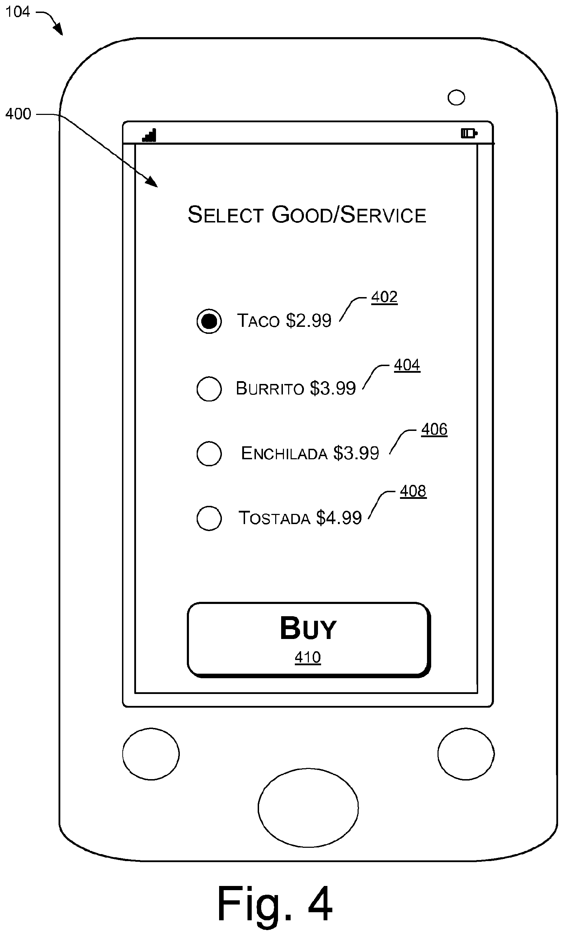

Fig. 4 shows an illustrative user interface 400 of the mobile computing device 104 providing a menu for the user 102 to select a good or service 108. In this example, the merchant is a restaurant selling Mexican food. The menu provides four different food choices a taco 402, a burrito 404, an enchilada 406, and a tostada 408. For each good or service 108 presented on the user interface 400, the menu may show a name, a description, a price, and the like. In this example user interface 400, the user 102 may select one or more of the choices by pressing a radio button next to his or her selection. Of course, this example is merely illustrative and the menu may have a greater or lesser number of items, and may be used to represent services for sale as well as other types of non-food goods. Once the user 102 has used the user interface 400 to indicate the goods and/or services 108 he or she wishes to buy, the user 102 may press the "Buy" button 410 to transmit the selection and payment information to the POS device 116.

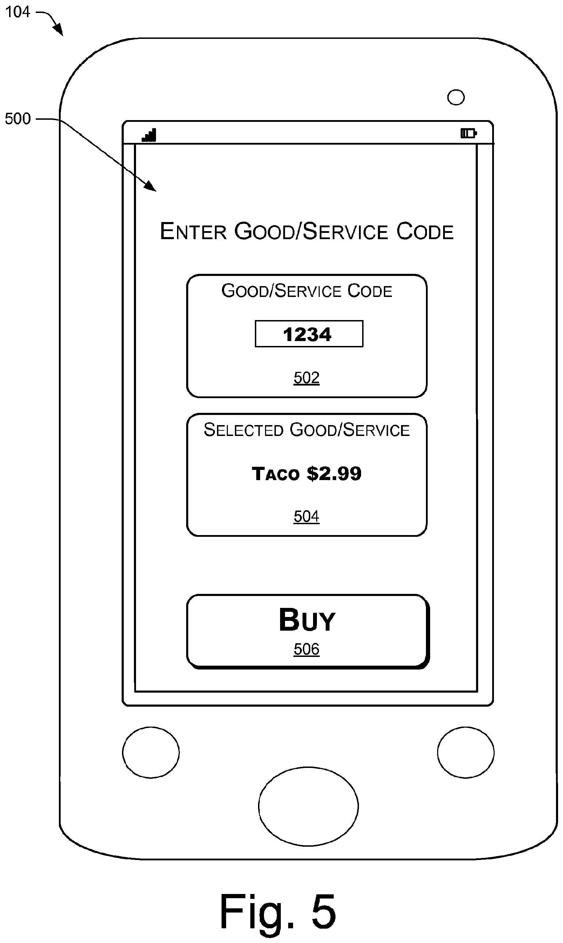

Fig. 5 shows an illustrative user interface 500 of the mobile computing device 104 providing a field 502 for the user 102 to enter a code associated with a good or service 108. For example, the restaurant selling Mexican food may have a conventional printed menu that lists codes next to the menu items. The user 102 may identify the code that corresponds with the good or service 108 he or she wishes to purchase and enter that code into the goods/service code field 502. In order to reduce the possibility of mistakenly entering the wrong code, the user interface 500 may also included a confirmation field 504 that shows the selected good and/or service 108 which corresponds with the code. Thus, if the user 102 enters the wrong code he or she will be able to identify that by examining the confirmation field 504. After the user has entered the code and confirmed that the code is correct, he or she may press the "Buy" button 506. Pressing the "Buy" button 506 may transmit the selection and payment information to the POS device 116.

The code may also be generated for a specific good or service 108 or combination of goods and services 108 purchased by the user 102. For example the code may be printed on a paper bill or invoice and the code is identified by the POS device 116 as corresponding to the particular bill or invoice and the code correlates with the amount of the payment for that bill or invoice. The confirmation field 504 may show the amount that will be charged and the user 102 can compare this amount to the amount appearing on the bill or invoice. If it is correct, the user 102 may press the "Buy" button 506. As one example, a restaurant could give diners a bill with a claim code that is associated with the total charge for the meal and this claim code could be entered into the goods/service code field 502.

Purchases of goods and/or services 108 that may require preparation by the merchant (e.g., cooking the taco) may also include a communication from the mobile computing device 104 responsive to the pressing of the "Buy" button 506 alerting the merchant of the purchase. The communication may be sent first to POS device 116 and then to the merchant or directly to the merchant such as to the merchant computing device 126. This communication informs the merchant of what was purchased and gives the merchant notice that the good or service 108 must be prepared for the customer. Thus, the POS device 116 and supporting architecture 100 shown in Fig. 1 may also provide an ordering functionality by telling the merchant what has been purchased and thereby allowing the merchant to prepare the good or service for sale.

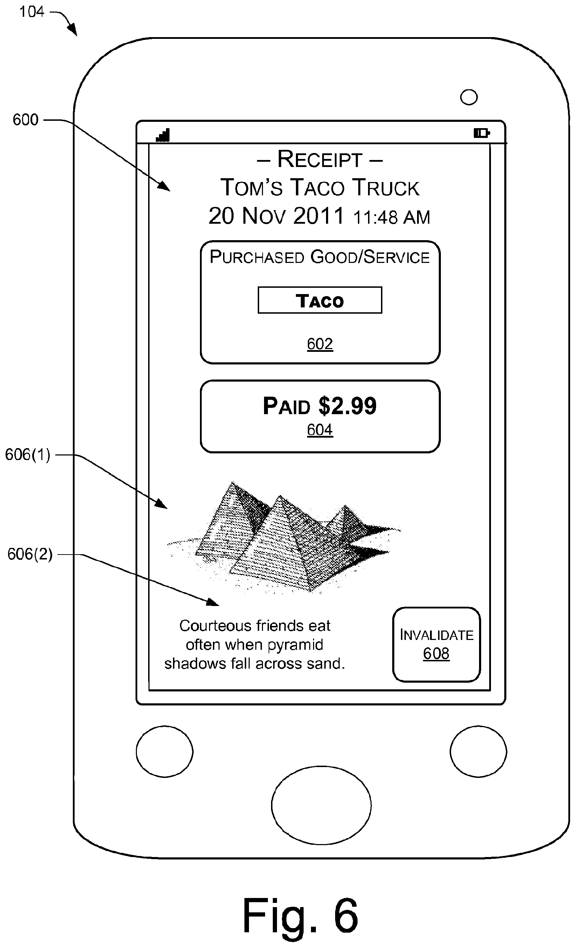

Fig. 6 shows an illustrative user interface 600 on the mobile computing device 104 displaying a receipt. The electronic receipt displayed on the user interface 600 may include the name of the merchant, a date, a time, and any other information found on a conventional printed receipt. The user interface 600 showing the receipt identifies the good and/or service 108 that was purchased 602. When the receipt is shown to the merchant, the merchant will know which good or service 108 to provide to the customer. The merchant can check that the customer is not trying to take additional goods and/or services 108 that were not purchased. The receipt may also indicate the status of the good or service 108 as being "paid" 604 and show the amount of the payment.

In some implementations, the receipt may include validation data 606 that can be examined by the merchant to confirm that the receipt is authentic. As a basic example, the validation data 606 may consist of a validation image 606(1) added to the receipt by the POS device 116. Here, the validation image 606(1) is a pyramid. An identical pyramid image may be used on every receipt. However, a forged receipt may be created relatively easily once the validation image 606(1) is known. More sophisticated techniques may be employed such as by using a large number of images that each include different forms of the validation image 606(1). For example, the validation image 606(1) may be a pyramid and each receipt may have a different picture of a pyramid. Although the validation image 606(1) shown in the example user interface 600 is clearly an image of a pyramid, the validation image 606(1) may be a relatively minor component of the total image, and thus, more difficult for a potential thief to discern from the image that appears on the receipt. For example, the image shown in this user interface 600 may also be a validation image 606(1) for shadows, sand, or triangles. Thus, the merchant 124 checking receipts may know to look for pictures that include a specific element (e.g., pyramid, sand, shadow, etc.) which may make it easy for the merchant 124 to quickly identify a receipt as having the correct validation image 606(1) or not. The validation image 606(1) may also require a combination of two or more features such as shadows and sand.

Validation text 606(2) may be used instead of or in addition to the validation image 606(1). The validation text 606(2) may be random words or words strung together in a sentence. There may be specific, predetermined words that are included in the validation text 606(2). However, without examining a relatively large number of receipts it may be difficult for a thief to determine which word or words are used to validate the receipt. For example, the required word in the validation text 606(2) shown in the user interface 600 could be "pyramid," "shadows," "sand," or any of the other words. If the merchant 124 knows which word or words to look for when reviewing receipts, it is relatively easy for him or her to identify forged receipts that lack the validation text 606(2). The ability to use validation text 606(2) allows for authentication of text-only receipts that may be received and displayed on mobile phones that lack all the features of a smart phone, but are able to receive text messages.

The words and/or images required to appear in the validation data 606 may be seeds or keys provided by the merchant to the POS device 116 and used by the receipt generation module 316 to generate a receipt with the validation data 606. For example, the merchant may set the seeds as "pyramid" and "shadows" for a given day and the POS device 116 will generate receipts with validation images 606(1) and/or validation text 606(2) that include the seeds.

The receipt may also include an invalidate button 608 that the merchant 124 may activate to invalidate the receipt. Invalidating the receipt may prevent re-use of a receipt to receive multiple goods and/or services 108 for a single payment. Invalidation of the receipt may cause the mobile computing device 104 to communicate the invalidity to the POS device 116 for tracking and security purposes. In some implementations, the merchant 124 may enter a code into the mobile computing device 104 to invalidate the receipt. This may prevent the user 102 from accidentally invalidating the receipt before receiving the purchased good or service 108. Receipts may also become invalidated by the passage of time (e.g., a receipt may only be valid for 24 hours and then expire even the invalidate button 608 is not pressed.

### Illustrative Processes

These processes discussed below are each illustrated as a collection of blocks in a logical flow graph, which represent a sequence of operations that can be implemented in hardware, software, or a combination thereof. In the context of software, the blocks represent computer-executable instructions stored on one or more computer-readable storage media that, when executed by one or more processors, perform the recited operations. Generally, computer-executable instructions include routines, programs, objects, components, data structures, and the like that perform particular functions or implement particular abstract data types. The order in which the operations are described is not intended to be construed as a limitation, and any number of the described blocks can be combined in any order and/or in parallel to implement the processes.

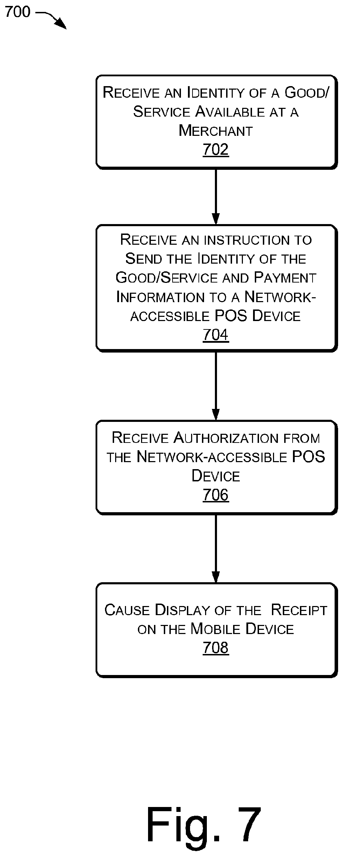

Fig. 7 is an illustrative process 700 for a mobile computing device 104 to facilitate purchase of a good or service from a merchant using a POS device 116. At 702, an identify a good or service 108 available from a merchant 124 at the merchant location 106 is received from a user 102 of the mobile computing device 104 while the mobile computing device 104 is at the merchant location 106. The identity may be provided by an image of a tag 110 associated with the good or service 108 that is captured using a camera of the mobile computing device 104. The mobile computing device 104 may be, but is not limited to, a mobile phone, a smart phone, a tablet computer, a personal digital assistant (PDA), or the like.

At 704, an instruction to send via the network 112 the identity of the good or service 108 and payment information 120 to a network-accessible POS device 116 associated with the merchant location 106 and located remote from the merchant location 106 is received from the user. The network 112 may be in whole or part a wireless network (e.g., Bluetooth®, Wi-Fi, etc.).

At 706, authorization to sell the good or service 108 to the user 102 is received from the POS device 116. The authorization may be based on the payment information provided at 704.

At 708, the receipt is displayed on the mobile computing device 104 in response to receiving the authorization at 706. The receipt is received via the network 112 from the POS device 116 and indicates receipt of payment for the identified good or service 108. The receipt, when displayed to the merchant 124 and validated by the merchant 124 may result in the merchant 124 allowing the user 102 to receive the good or service 108 from the merchant 124. Validation may include the merchant 124 simply identifying that the customer has a receipt. Validation may also include the merchant 124 checking validation data included on the receipt and/or matching the receipt to a receipt displayed on the merchant computing device 126. In some implementations, the receipt may be displayed to the merchant 124 at an exit of the merchant location 106 or the receipt may be displayed to the merchant 124 when the customer requests the good or service 106 from the merchant 124.

The user 102 of the mobile computing device 104 may select the timing of displaying the receipt. He or she may display the receipt to the merchant 124 at any time after receiving the receipt from the POS device 116. The user 102 can then receive the good or service 108 from the merchant 124 at substantially the same time. For example, after selecting a good 108 at the merchant location 106 and paying for the good 108, the user 102 may take the good 108 to an exit of the merchant location 106 and leave with the good 108 immediately after displaying the receipt to the merchant 124. As an additional example, the user 102 may select and pay for a service 108 and then, after displaying the receipt, receive the service 108 from the merchant 124 as soon as the merchant 124 can provide the service. Thus, paying with the POS device 116 does not necessarily introduce any delays beyond those that might be experienced by a customer paying with cash.

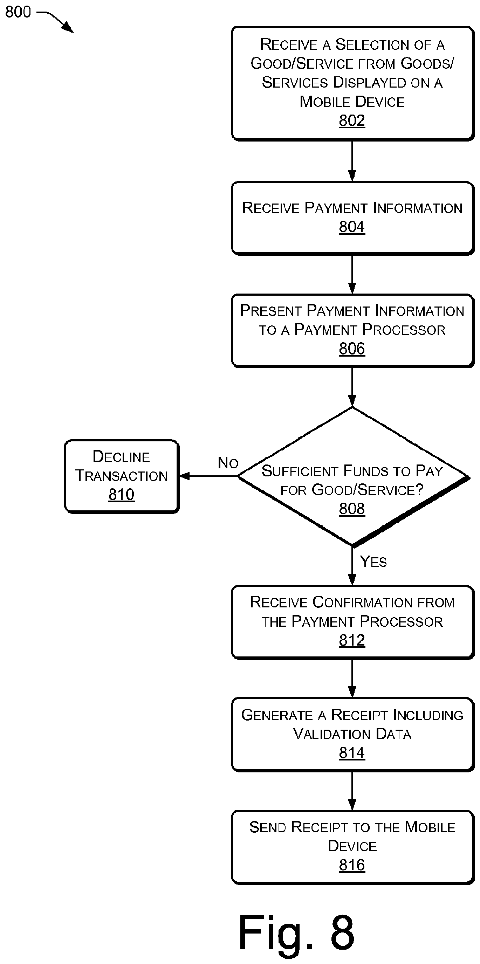

Fig. 8 is an illustrative process 800 for processing a transaction initiated by a user selecting a good or service 108 from a list displayed on a mobile computing device 104. At 802, a selection of a good or service 108 from the goods and services available at the merchant location 106 is received. The goods and services available at the merchant may be displayed as a list on a mobile computing device 104 in a user interface such as the user interface 400 shown in Fig. 4. The selection may be made by a user 102 of the mobile computing device 104 while the user 102 and the mobile computing device 104 are located at the merchant location 106. For example, the user 102 may select a taco from the list while standing in front of a taco truck.

Geolocation of the mobile computing device 104 may be used to identify the correct list of goods and services to display on the mobile computing device 104. For example, the list of goods and services of the merchant location 106 closest to the detected location of the mobile computing device 104 may be presented. The location of the mobile computing device 104 may also be identified by the user 102 supplying location information such as entering a postal code, typing in an address, or selecting a location on a map. Thus, correlation between the location of the mobile computing device 104 and the merchant location 106 may be accomplished with user input for devices that are not location aware.

At 804, payment information 120 is received from the mobile computing device 104. The payment information 120 may be entered by the user 102 into the mobile computing device 104 to pay for the good or service 108. For example, the user 102 may type in his or her credit card number.

At 806, the payment information 120 is presented to a payment processor 118.

At 808, the payment processor 118 determines if there are sufficient funds in an account associated with the payment information 120 to pay for the good or service 108. If there are not sufficient funds, process 800 proceeds along the "no" path to 810 and the transaction is declined. If there are sufficient funds, process 800 proceeds along the "yes" path to 812.

At 812, confirmation is received from the payment processor 118 that the payment information 120 is associated with sufficient funds to pay for the good or service 108.

At 814, a receipt is generated. The receipt may include validation data 606, such as that shown in Fig. 6, which is based at least in part on seed information provided by the merchant 124 operating the merchant location 106. The receipt may also include an indication of the good or service 108 that was selected at 802.

At 816, the receipt is sent to the mobile computing device 104. The user 102 of the mobile computing device 104 may display the receipt to the merchant 124 as evidence of payment for the good or service 108.

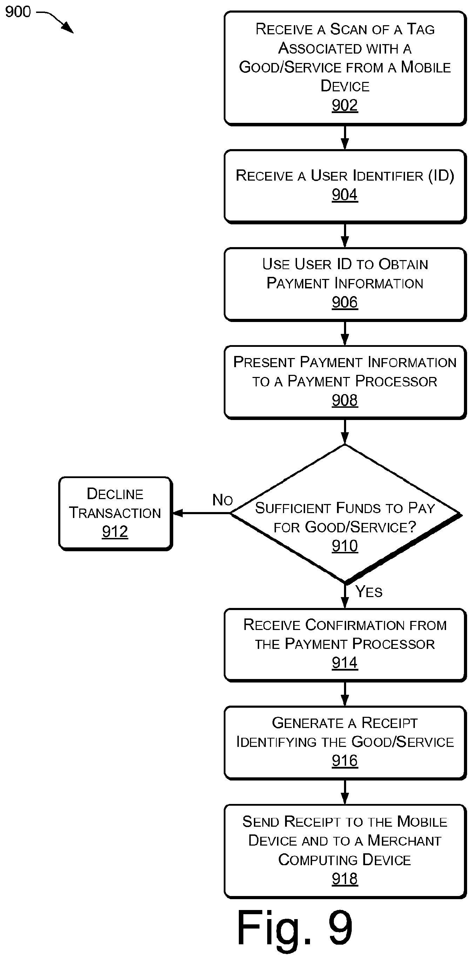

Fig. 9 is an illustrative process 900 for processing a transaction initiated by a user 102 scanning a tag 110 associated with a good or service 108 by using a mobile computing device 104. At 902, a scan of a tag 110 associated with a good or service 108 available at a merchant location 106 is received. The scan 110 may be generated by a mobile computing device 104 while a user 102 of the mobile computing device 104 and the mobile computing device 102 are located at the merchant location 106. For example, the user 102 may place his or her smart phone in scan mode and pass the smart phone near an RFID tag inside product packaging to scan the desired good 108.

At 904, a user identifier (ID) that uniquely identifies the user is received from the mobile computing device 104. The user ID may be specific to the individual user 102 (e.g., "John"), specific to the mobile computing device 104 (e.g., John's smart phone), or associated with a particular merchant (e.g., John's account with Merchant X).

At 906, the user ID is used to obtain previously stored payment information 120 associated with the user 102 to pay for the good or service 108. For example, the payment information 120 may be stored on the network or in the cloud on a network-accessible storage device 122 that links the user ID with one or more sets of payment information 120 (e.g., four different credit cards of the user 102).

At 908, the payment information 120 is presented to a payment processor 118.

At 910, the payment processor 118 determines if there are sufficient funds in an account associated with the payment information 120 to pay for the good or service 108. If there are not sufficient funds, process 900 proceeds along the "no" path to 912 and the transaction is declined. If there are sufficient funds, process 900 proceeds along the "yes" path to 914.

At 914, confirmation from the payment processor 118 that the payment information 120 is associated with sufficient funds to pay for the good or service 108 is received.

At 916, a receipt is generated that identifies the good or service 108 in response to receiving the confirmation at 914. The receipt may also, optionally, identify an amount paid for the good or service and/or validation data.

At 918, the receipt is sent to the mobile computing device 104 and to a merchant computing device 124. Matching the receipt on the mobile computing device 104 with the receipt on the merchant computing device 124 provides evidence of payment for the good or service 108. Thus, the merchant 124 when seeing the same receipt on his or her computing device 124 as the user 102 is displaying on a mobile computing device 104 is able to confirm that this user 102 paid for the good or service 108 indicated on the receipt.

### Illustrative Architecture, Devices, and Data Stores

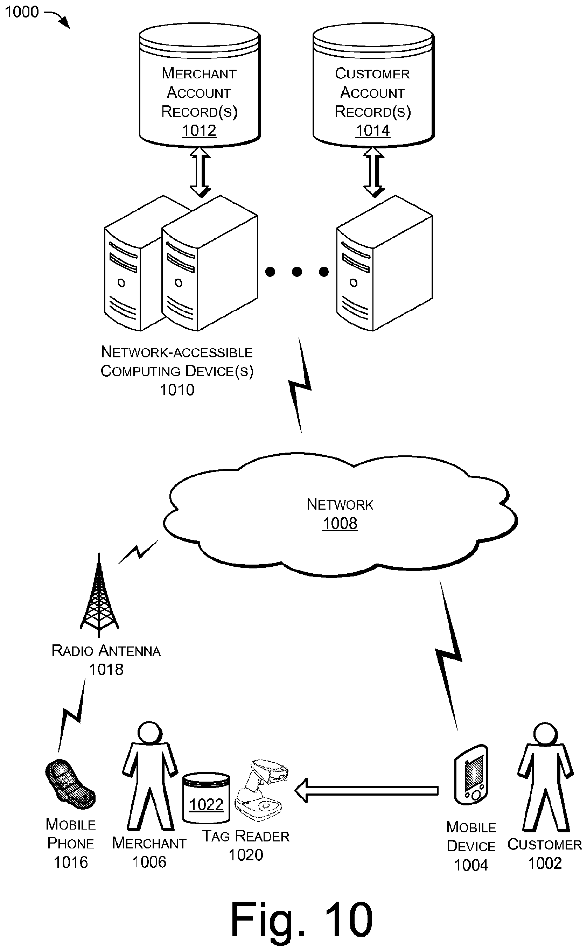

Fig. 10 shows an illustrative architecture 1000 in which a customer 1002 employs a mobile device 1004 to purchase an item from a merchant 1006. The mobile device 1004 may be implemented as any type of mobile computing device, including but not limited to a smart phone, a personal digital assistant (PDA), a laptop computer, a tablet computer, an eBook reader, a personal media player (PMP), a portable gaming system, and so forth. The customer 1002 may be equivalent to the user 102 described with reference to Fig. 1, the mobile device 1004 may be equivalent to mobile computing device 104, and the merchant 1006 may be equivalent to the merchant 124.

The mobile device 1004 may be connected to a network 1008 (e.g., the network 112). The network 1008 may include any one or combination of multiple different types of networks, such as cable networks, local area networks, personal area networks, wide area networks, the Internet, wireless networks, ad hoc networks, mesh networks, and/or the like. The mobile computing device 1004 may access the network 1008 through a wired or wireless connection such as a connection using radio signals (e.g., Wi-Fi, Bluetooth®, 3G network, 4G network, etc.).

One or more network-accessible computing devices 1010 may also be connected to the network 1008 and communicate with the mobile device 1004 through the network 1008. The network-accessible computing devices 1010 may be equivalent to the network-accessible computing device 114 described with reference to Fig. 1. The network-accessible computing devices 1010 may be server computers or other types of computing devices in a centralized or distributed architecture. Thus, the network-accessible computing devices 1010 may represent "cloud-based" computing resources distributed across various machines and/or geographic locations. The network-accessible computing device(s) 1010 may include or be communicatively connected to one or more data stores that include one or more merchant account records 1012 and one or more customer account records 1014. The merchant account record(s) 1012 may include information provided by the merchant 1006 to set up an account on the network-accessible computing device(s) 1010 including information to provide verification that a transaction reported on the mobile device 1004 represents an actual payment. The customer account record(s) 1014 include information identifying the customer 1002 and payment information for funding transactions with the merchant 1006.

The merchant 1006 may engage in transactions with the customer 1002 without using any local devices other than the mobile device 1004 of the customer 1002. However, in some implementations, the merchant 1006 may use a mobile phone 1016 to receive information regarding transactions with the customer 1002. The mobile phone 1016, which may be equivalent to the merchant computing device 126 described with reference to Fig. 1, may use radio signals to communicate with a radio antenna 1018 which in turn may provide connectivity via the network 1008 to the network-accessible computing device(s) 1010. Thus, the mobile phone 1016 may be implemented as a "dumb" phone without direct connection to the Internet or any network other than a cellular phone network. The mobile phone 1016 may receive text or short message service (SMS) messages from the network-accessible computing device(s) 1010. The messages received by the mobile phone 1016 may be used to provide confirmation of payments made by the mobile device 1004 to the merchant 1006, to provide PINs or codes for the merchant 1006 to access "secret" information on the mobile device 1004, or for other purposes.

The merchant 1006 may also, in some implementations, use a tag reader 1020 to read a tag presented by the mobile device 1004. The tag reader 1020 may be implemented as a scanner (e.g., reflective light, laser, etc.) that scans an image such as a bar code or QR code displayed on the mobile device 1004. The tag reader 1020 may be implemented in other ways such as a camera combined with machine vision software that receives and interprets images (e.g., including images more visually complex than bar or QR codes) displayed on the mobile device 1004. Implementations of the tag reader 1020 are not limited to receiving only visual information from the mobile device 1004, but when implemented as, for example, a microphone the tag reader 1020 may receive audio information, a "sound tag," from a speaker on the mobile device 1004.

The tag reader 1020 may indicate whether a tag presented by the mobile device 1004 is valid or invalid. Valid tags may provide evidence that a payment from the customer 1002 made using the mobile device 1004 was received by the merchant 1006. Invalid tags may indicate that the tag (e.g., image, sound, etc.) rendered by the mobile device 1004 was not received from the network-accessible computing device(s) 1010 in response to an actual payment, but was possibly "faked" by the customer 1002 or that some other problem exists. The tag reader 1020 may indicate the validity of a tag by illuminating a colored light and/or making a sound (e.g., green light for valid, red light for invalid; bell for valid, buzzer for invalid). The merchant 1006 may then respond appropriately to the customer 1002 based on the response from the tag reader 1020.

The tag reader 1020 may be a relatively simple device without a connection to the network 1008. Thus, instructions for differentiating between valid and invalid tags that are stored in the tag reader 1020 may be updated infrequently or not at all. Therefore, a tag which was valid once made be interpreted as valid every time that tag is presented to the tag reader 1020.

To prevent reuse of a tag, the tag reader 1020 may use its own local memory 1022 to store transaction records. Preventing reuse of a tag may keep the customer 1002 from receiving an item multiple times when the customer 1002 has only paid once. Each tag may encode a transaction identifier that can be used to uniquely identify the transaction. The transaction identifier may be a number, an alphanumeric string, a hash code, or a similar value derived from any combination of the customer's 1002 identity, an identifier of the mobile device 1004, the merchant's 1006 identity, the item that is the subject of the transaction, a time of the transaction, a payment amount for the transaction, or other data. When the tag is scanned, the transaction identifier may be stored in the memory 1022. At the time of scanning, the transaction identifier may be made compared to other transaction identifiers in the memory 1022, and if a match is found the tag reader 1020 may indicate that the tag is invalid. Thus, the tag is interpreted as invalid because the tag is associated with a previously used transaction identifier. This is one technique for preventing the customer 1002 from reusing a receipt to obtain additional items for free. The contents of the memory 1022 may be periodically erased to create room for additional records. For example, the memory 1022 may be erased when the instructions in the tag reader 1020 for identifying a valid tag are updated.

In other implementations, the tag reader 1020 may be a more sophisticated device that is connected to the network 1008, and as such, the memory 1022 may be network-accessible memory 1022 and located somewhere in the "cloud" but not necessarily in physical proximity to the tag reader 1020. Multiple tag readers 1020 may also share the memory 1022 to maintain a collective list of transaction identifiers by using a local network within a merchant 1006 without necessarily having a connection to the network 1008. With a collective memory 1022 multiple tag readers 1020, such as at a large merchant 1006, may share the same list of used transaction identifiers thereby preventing a customer 1002 from using a tag at one checkout location and then attempting to use the same tag again at a different checkout location.

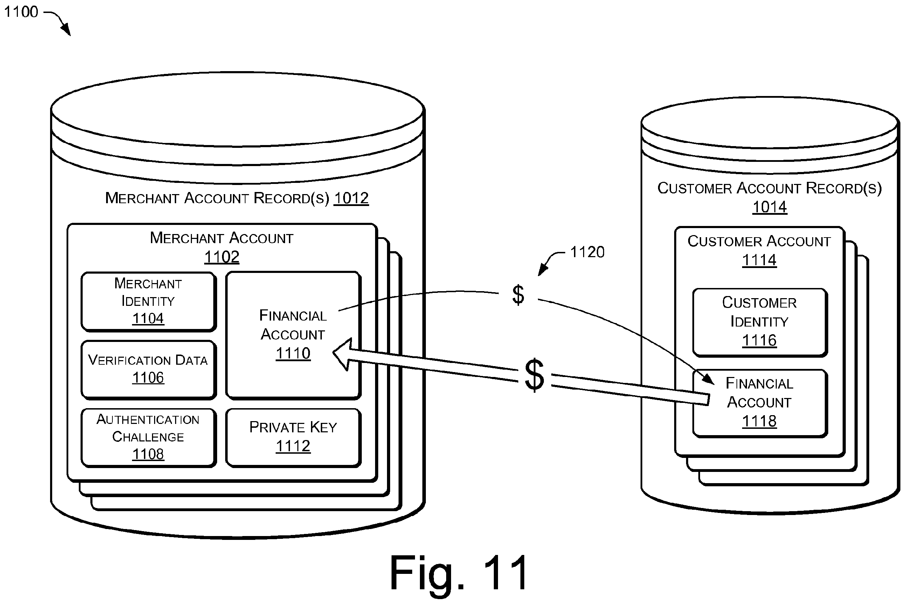

Fig. 11 shows a schematic representation 1100 of the contents of the merchant account record(s) 1012 and the customer account record(s) 1014 in greater detail. The merchant account record(s) 1012 may include accounts for multiple merchants including the merchant 1006 shown in Fig. 10. The merchant 1006 may provide various types of information to the network-accessible computing device(s) 1010 when establishing a merchant account 1102. Each merchant account 1102 may include the merchant identity 1104 represented as a name of the merchant 1006, a unique identifier number or code of the merchant 1006, an address of a merchant 1006, a location of the merchant 1006 on the surface of the earth (e.g., latitude and longitude), and any other information that can serve to identify the merchant 1006.

The merchant account 1102 may also include validation data or verification data 1106 that is provided to the mobile device 1004 so that merchant 1006 is able to verify the authenticity of payment confirmation shown on the mobile device 1004. Verification data 1106 may be something the merchant has previously selected and possibly uploaded to the merchant account 1102. For example, the verification data 1106 may include text, a picture, a sound, a video, or a haptic response any of which may be rendered by the mobile device 1004.

The verification data 1106 may also include other types of data that the merchant 1006 does not need to specifically provide or upload to the merchant account 1102, but that may be easily recognizable by the merchant 1006. For example, verification data 1106 may also include recent purchase history of the merchant 1006, a list of contacts of the merchant 1006, or a social graph of connections of the merchant 1006 in one or more social networks. As a further example, verification data 1106 may be drawn from the pre-existing content in a social media account of the merchant 1006 such as pictures of friends or contacts from the social media account. The network-accessible computing device(s) 1010 may be associated with an on-line retailer and the merchant's account with the online retailer may provide a recent purchase history of the merchant 1006 from the online retailer (e.g., most recent three purchases) as verification data 1106. It is unlikely that the customer 1002 would be able to "spoof' this information so using this information as verification data 1106 provides the merchant 1006 confidence that it did in fact come from the network-accessible computing device(s) 1010.

Similarly, the network-accessible computing devices(s) 1010 may have access to or be associated with an online address book, an instant messenger account, an e-mail account, or the like that includes a list of contacts of the merchant 1006. The list of contacts or a subset of the list, for example the three most frequently contacted individuals, may be used as the verification data 1106. Relationships derived from a social network in which the merchant 1006 participates may be used to create a social graph of connections such as a graph of nodes and edges showing other entities near the merchant 1006 in the merchant's social network. An image, or other representation, of the social graph may also serve as verification data 1106. Any one or combination of the previous examples may be used as verification data 1106.

The merchant account 1102 may also include an authentication challenge 1108 that may be required to be provided to the mobile device 1004 before the mobile device 1004 will render the verification data 1106. The authentication challenge 1108 may be a password that the merchant 1006 provides to the mobile device 1004 to authenticate the merchant 1006 to the mobile device 1004. The authentication challenge 1108 may also be implemented as a personal identification number (PIN), a physical gesture (e.g., drawn on a touch-screen of the mobile device 1004), a spoken phrase (e.g., recognized using voice recognition), or another biometric identifier such as a finger print, a facial image (e.g., using a camera on the mobile device 1004), or the like.

The merchant 1006 receives electronic payments from the customer 1002 in a financial account 1110 associated with the merchant 1006. The merchant account 1102 may include the financial account 1110 as part of the merchant account 1102 or may include the necessary information (e.g., passwords, communication protocols) to access a financial account of the merchant elsewhere such as at a bank. The financial account 1110 associated with the merchant 1006 represents the target or end point for payments from the customer 1002 to the merchant 1006.

As an additional or alternative form of security, the merchant account 1102 may also include a private key 1112. The private key 1112 may be part of an asymmetric key pair. The public key may be stored on the mobile device 1004 as part of the software used by the mobile device 1004 to access the network-accessible computing device(s) 1010. By using the private key 1112 to sign data originating from the network-accessible computing device(s) 1010 fraudulent data sent from other network-accessible computing devices can be identified and ignore because that fraudulent communication lacks the private key 1112.

The customer 1002 may also have his or her own customer account 1114 stored with other customer account records 1014. The customer account records 1014 may include any number of customer accounts 1114 for numerous individual customers such as the customer 1002 shown in Fig. 10. The customer 1002 may create his or her customer account 1114 well in advance of initiating a transaction with the merchant 1006 or while at the merchant 1006.

The customer account 1114 may include the customer identity 1116 and one or more financial accounts 1118. The customer identity 1116 may be the customer's name or another unique identifier of the customer 1002. In some implementations, the customer identity 1116 may be tied to the mobile device 1004 and the customer identity 1116 may be based on a serial number or identifier of the mobile device 1004. The financial account 1118 associated with the customer 1002 may include a financial account that is part of the customer account 1114 or the financial account 1118 associated with the customer 1002 may include information such as passwords and communication protocols to access a financial account elsewhere. The customer account 1114 may include information about multiple financial accounts 1118 associated with the customer 1002 such as multiple credit card accounts, checking accounts, savings accounts, and the like. The customer 1002 may select one of these accounts as a default account to use when making electronic payments with his or her mobile device 1004. The financial account 1118 associated with the customer 1002 provides the source of funds for payments to the financial account 1110 associated with the merchant 1006.

In some situations the merchant 1006 may pay the customer 1002 shown by the "reverse" transaction 1120. Flow of funds from the merchant's financial account 1110 to the customer's financial account 1118 may also be implemented by using the mobile device 1004. The reverse transaction 1120 may represent a refund for a returned item, a credit applied for a coupon or other discount, a difference between an initial larger charge and the actual, lower amount due to the merchant 1006, or the like. In order to prevent the customer 1002 from being able to use his or her mobile device 1004 to take money out of the merchant's financial account 1110, the reverse transaction 1120 functionality of the mobile device 1004 may require a correct answer to the authentication challenge 1108. For example, the merchant's PIN may be required in order to transfer money from the merchant's financial account 1110 to the customer's financial account 1118.

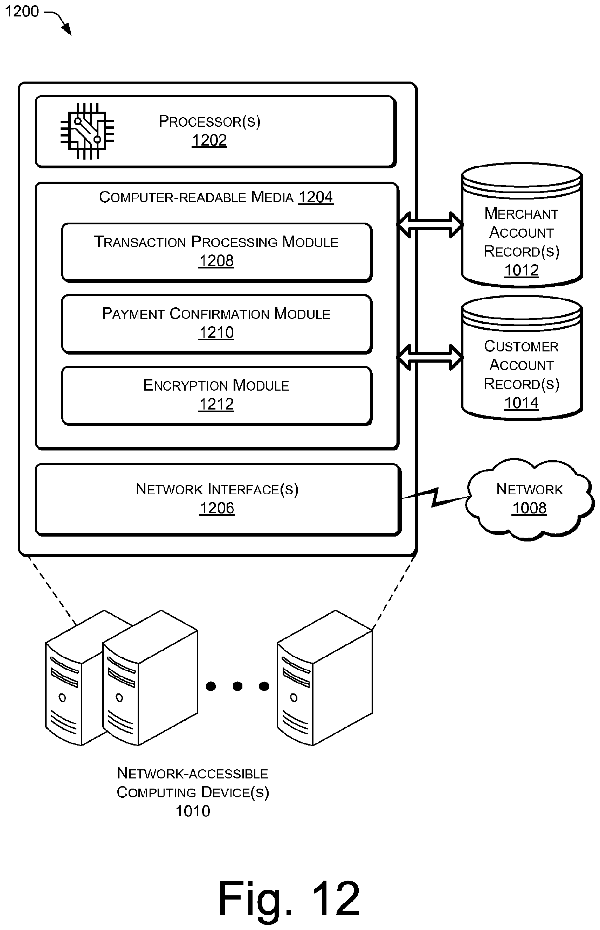

Fig. 12 shows illustrative block diagram 1200 of components in the one or more network-accessible computing devices 1010 of Fig. 10. The network-accessible computing device(s) 1010 comprises one or more processors 1202 and one or more forms of computer-readable media 1204. The computer-readable media 1204 may include, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other non-transitory computer-readable medium which can be used to store information and which can be accessed by a processor. The network-accessible computing device(s) 1010 also includes one or more network interfaces 1206 for communicating with network 1008. The network interfaces 1206 may provide network connectivity through any wired or wireless technology such as a phone line, Ethernet, coaxial cable, Bluetooth®, Wi-Fi, or the like.

The computer-readable media 1204 may contain one or more modules representing computer-executable instructions that may be executed on the one or more processors 1202. These modules may be implemented, partially or wholly, with the modules discussed with reference to Fig. 3. One illustrative module is a transaction processing module 1208. The transaction processing module 1208 may receive a request from the mobile device 1004 to transfer a payment amount from the financial account 1118 associated with the customer 1002 to the financial account 1110 associated with the merchant 1006. The transaction processing module 1208 may instruct the financial account 1118 associated with the customer 1002 to transfer the payment amount indicated by the customer to the financial account 1110 associated with the merchant 1006. Once the payment has cleared into the financial account 1110 associated with the merchant 1006, the transaction processing module 1208 may receive a confirmation.

A payment confirmation module 1210 stored in the computer-readable media 1204 may send the verification data 1106 and the authentication challenge 1108 from the merchant account record(s) 1012 to the mobile device 1004 upon receiving an indication that the merchant 1006 received a payment from the customer 1002. The indication may be the confirmation received by the transaction processing module 1208. The verification data 1106 is configured to remain concealed on the mobile device 1004 until a valid response to the authentication challenge 1108 is provided by the merchant 1006 to the mobile device 1004.

An encryption module 1212 stored in the computer-readable media 1204 may encrypt the verification data 1106 so that a device (e.g., the tag reader 1020) at the merchant 1006 is able to decrypt the verification data 1106 and the mobile device 1004 is not able to decrypt the verification data 1106. For example, an encrypted string of data may be represented as a barcode that is sent to the mobile device 1004 and displayed for scanning by the tag reader 1020. Reading the barcode may simply provide the encrypted string of data without decrypting the data. The tag reader 1020 may include the necessary key to decrypt the data and check if it is valid or invalid.

The encryption module 1212 may also function to encrypt the verification data 1106 and/or the authentication challenge 1108 with the private key 1112. The encrypted data can then be decrypted by the corresponding public-key on the mobile device 1004. Use of the private key 1112 to sign outgoing data from the network-accessible computing device(s) 1010 provides additional assurance that the communication received by the mobile device 1004 is not a fraudulent message intended to mimic a message sent from the network-accessible computing device(s) 1010.

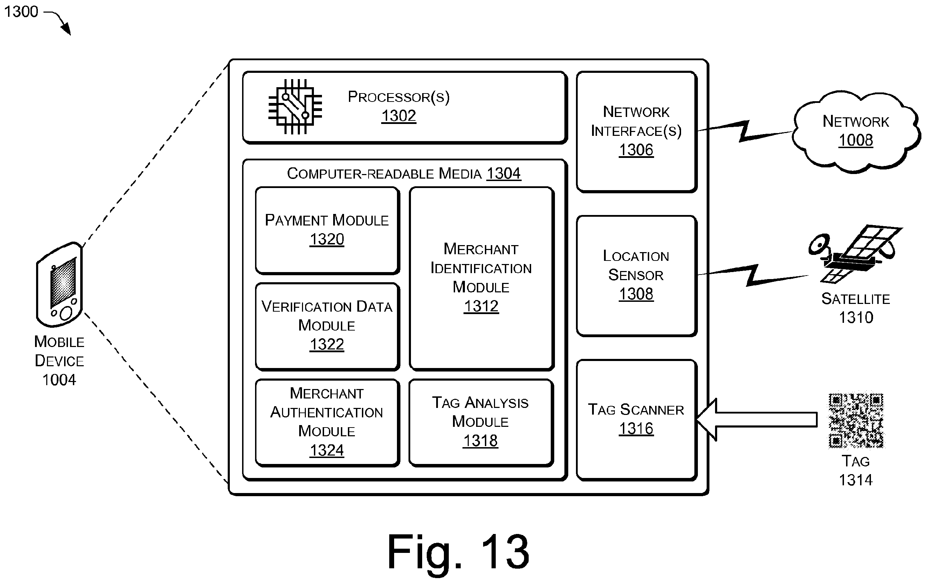

Fig. 13 shows an illustrative block diagram 1300 of components in the mobile device 1004 of Fig. 10. The mobile device 1004 comprises one or more processors 1302 and one or more forms of computer-readable media 1304. The mobile device 1004 also includes one or more network interfaces 1306 for communicating with the network 1008. The network interfaces 1306 may provide network connectivity through any wired or wireless technology such as a phone line, Ethernet, coaxial cable, Bluetooth®, Wi-Fi, or the like.

In some implementations, the mobile device 1004 may have a location sensor 1308 so that the mobile device 1004 is location aware, or is able to provide information to another entity (e.g., the network-accessible computing device(s) 1010) to allow the other entity to determine a location of the mobile device 1004. A location on the surface of the earth, or a "geolocation," may be provided to the location sensor 1308 by a satellite 1310 such as a global positioning system (GPS) satellite. Alternatively, wireless signals such as from a radio antenna may be used to determine a geolocation of the mobile device 1004 relative to a known position of the radio antenna or by triangulation. Other technologies and methods for determining geolocation are also envisioned within the scope of this disclosure such as, for example, calculating geolocation based on a network access point (e.g., Wi-Fi hotspot) or from a locator signal broadcast from a known location such as inside the merchant 1006.

The computer-readable media 1304 of the mobile device 1004 may include one or more modules such as a merchant identification module 1312 to receive information identifying the merchant 1006. The customer 1002 may input the identity of the merchant 1006 into the mobile device 1004. The merchant identification module 1312 may receive this input and use it to identify the merchant 1006. In some implementations, the merchant identification module 1312 may compare the information provided by the customer 1002 with merchant identity 1104 information stored in the merchant account record(s) 1012 to locate a match. The merchant identification module 1312 may also use the geolocation of the mobile device 1004 as determined by the location sensor 1308 to identify the merchant 1006 by comparing the geolocation of the mobile device 1004 to a list or map of merchant locations. Geolocation may be combined with customer input to create a list of nearby merchants from which the customer 1002 can select the correct merchant 1006.

The merchant identification module 1312 may also identify the merchant 1006 by a tag 1314 located at the merchant 1006. The tag 1314 may be a barcode, a QR code, a radio frequency identification (RFID) tag, or other type of tag that the merchant 1006 can place at the merchant location (e.g., a QR code printed on a menu at a restaurant). The tag 1314 may contain information identifying the merchant 1006 such as the merchant's name or a unique identifier used to match the merchant 1006 with a merchant identity 1104 stored in one of the merchant accounts 1102 in the merchant account record(s) 1012. The tag 1314 may be read by a tag scanner 1316 in the mobile device 1004. The tag scanner 1316 may be implemented as a camera, a reflected light scanner, an antenna configured to receive signals from RFID tags, or the like. Data obtained by the tag scanner 1316 may be processed by a tag analysis module 1318 stored in the computer-readable media 1304. The tag analysis module 1318 may identify the merchant 1006 based on the data obtained from the tag 1314 scanned by the tag scanner 1316 and provide the information identifying the merchant 1006 to the merchant identification module 1312.

A payment module 1320 stored in the computer-readable media 1304 may receive an indication of a payment amount and provide instructions to transfer the payment amount from an account associated with the mobile device 1004 (e.g., the financial account 1118 associated with the customer 1002) to an account associated with the merchant 1006 (e.g., the financial account 1110 associated with the merchant 1006). The indication of the payment amount may be provided by the customer 1002 entering the payment amount into the mobile device 1004. In some implementations the payment amount may be included in the tag 1314 (e.g., printed on a bill) and provided to the payment module 1320 by the tag analysis module 1318.

A verification data module 1322 stored in the computer-readable media 1304 may receive the verification data 1106 indicating that the account associated with the merchant 1006 (e.g., financial account 1110) has received the payment amount. To help keep the verification data 1106 secret from the customer 1002, the authentication challenge 1108 associated with the verification data 1106 may also be received by the verification data module 1322.

A merchant authentication module 1324 stored in the computer-readable media 1304 may receive a response to the authentication challenge 1108 and, after receiving a valid response, render the verification data 1106. Thus, the merchant authentication module 1324 may use the authentication challenge 1108 to prevent the customer 1002, or anyone else other than the merchant 1006, from accessing the verification data 1106. This decreases the likelihood that a party other than the merchant 1006 can copy the verification data 1106 to use in a fake receipt.

### Illustrative User Interfaces

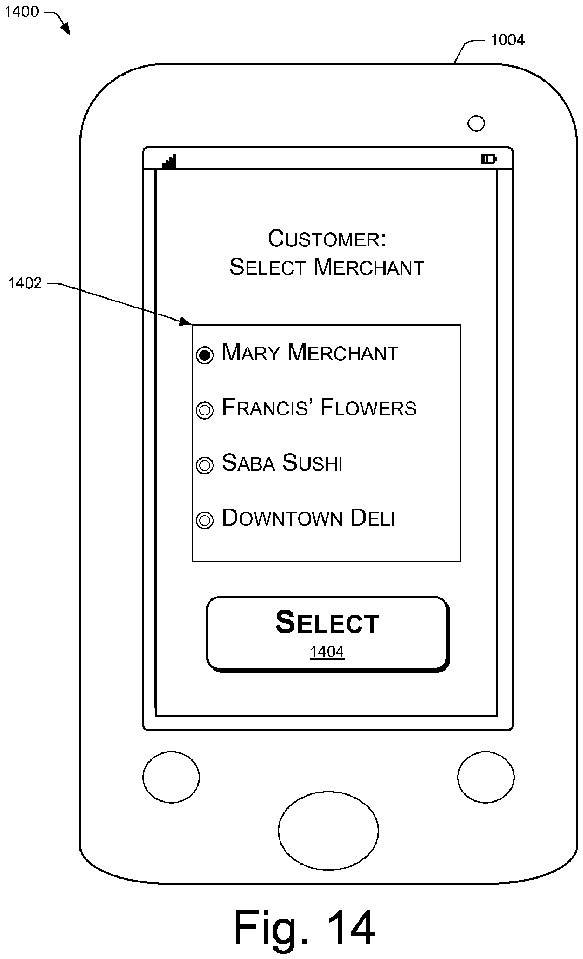

Fig. 14 shows an illustrative user interface 1400 of the mobile device 1004 providing a list of merchants 1402 to the customer 1002. In this example, the customer 1002 indicates that the merchant 1006 he or she wishes to pay is "Mary Merchant." The list of merchants 1402 may be populated based on the geolocation of the mobile device 1004 with those merchants 1006 that are closest to the current location of the mobile device 1004. The list of merchants 1402 may also be populated based on a merchant name or identifier entered by the customer 1002. Once a customer 1002 has identified and indicated the merchant 1006 that he or she wishes to transact with, the customer 1002 may suppress the "select" button 504 to select Mary Merchant as a recipient for an electronic payment.

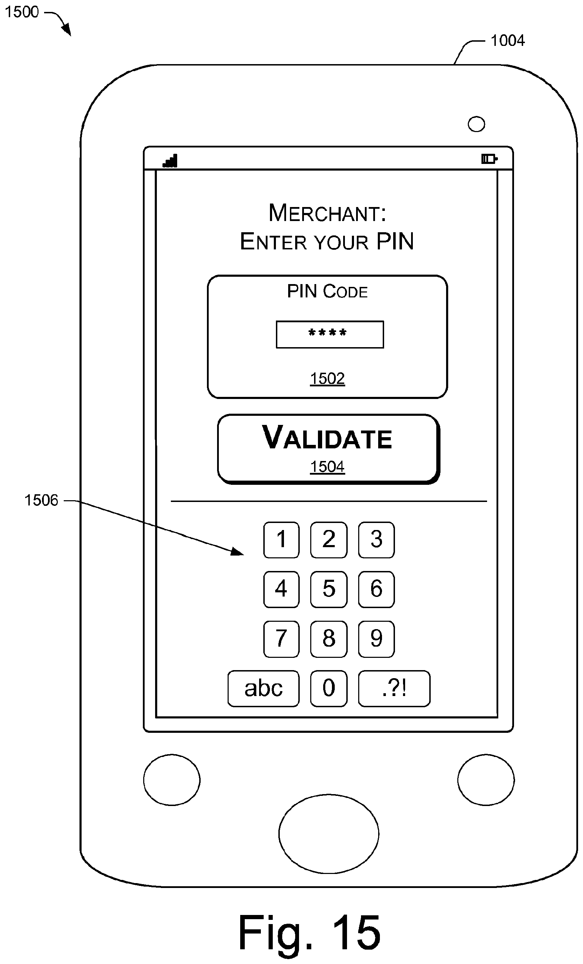

Fig. 15 shows an illustrative user interface 1500 of the mobile device 1004 providing a field 1502 for the merchant 1006 to enter a PIN code. While the previous user interface 1400 is intended for the customer 1002 to enter information into the mobile device 1004, this user interface 1500 is intended for the merchant 1006 to enter information into the mobile device 1004. Entering the PIN code is one example of the authentication challenge 1108. The user interface 1500 or a similar user interface may be presented to receive other types of authentication challenge 1108 such as the merchant 1006 drawing a symbol with his or her finger on a touch screen of the mobile device 1004. The merchant 1006 may submit the PIN code for validation (e.g., by the transaction processing module 1110) by pressing the "validate" button 1504. The user interface 1500 may also include a numeric keypad 1506 for the merchant 1006 to enter the PIN. In implementations in which the authentication challenge 1108 is something other than a PIN, the user interface 1500 may present appropriate input elements instead of the numeric keypad 1506. For example, if the authentication challenge 1108 is a spoken phrase, the user interface 1500 may display a "record" button for the merchant 1006 to press before speaking the phrase into the microphone of the mobile device 1004. Entry of a valid response to the authentication challenge 1108 causes the mobile device 1004, for example the merchant authentication module 1318, to display the verification data 1106.

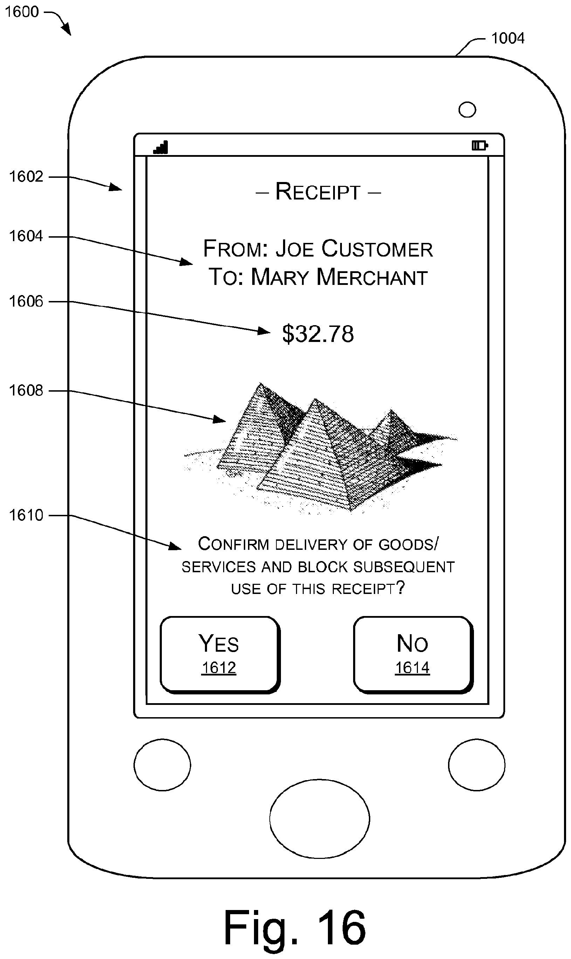

Fig. 16 shows an illustrative user interface 1600 on the mobile device 1004 displaying a receipt 1602. The receipt 1602 displayed on the user interface 1600 may include the name of the customer making the payment and the merchant receiving the payment 1604. The receipt 1602 may also include a date, a time, and any other information found on a conventional printed receipt. The receipt 1602 shows the payment amount 1606 received by the financial account 1110 associated with the merchant 1006. The receipt 1602 also shows the verification data 1106 illustrated here by a picture of pyramids 1608. The picture of pyramids 1608 may have been obtained from the verification data 1106 of the merchant account 1102. Since this image 1608 may be something selected previously by the merchant 1006, when it is rendered by the mobile device 1004 of the customer 1002, this provides the merchant 1006 assurance that other information in the receipt 1602 such as the payment amount 1606 was in fact supplied by the network-accessible computing device(s) 1010 and not merely an image displayed on the screening of the customer's 1002 mobile device 1004.

In some implementations, the user interface 1600 may allow the merchant 1006 to indicate that the item was provided to the customer 1002 and to delete the picture of pyramids 1608 from the mobile device 1004 or otherwise block the mobile device 1004 from showing the picture of pyramids 1608 a second time. The user interface 1600 may provide a query 1610 to the merchant 1006. In response to the query 1610, the merchant 1006 select a "yes" 1612 button if the item was already provided to the customer 1002 or select a "no" 1614 button if the item has not yet been provided to the customer 1006. Example, confirmation that the item was provided and a command to block subsequent presentation of the verification data 1106, the pyramids 1608, may be provided as a single input from the merchant 1006 specifically pressing the "yes" 1612 button. In other implementations, there may be separate inputs or user interface elements for the merchant 1006 to acknowledge that the item was provided to the customer and to delete or block subsequent presentation of the verification data 1106. Upon pressing "yes" 1612 button, the user interface 1600 may cease to show the receipt 1602 and the merchant 1006 may return the mobile device 1004 to the customer 1002. In other implementations, pressing the "yes" 1612 button may remove the picture of the pyramids 1608 but leave the remainder of the receipt 1602 displayed on the mobile device 1004. Thus, the customer 1002 may receive a version of the receipt 1602 that does not include the verification data 1106.

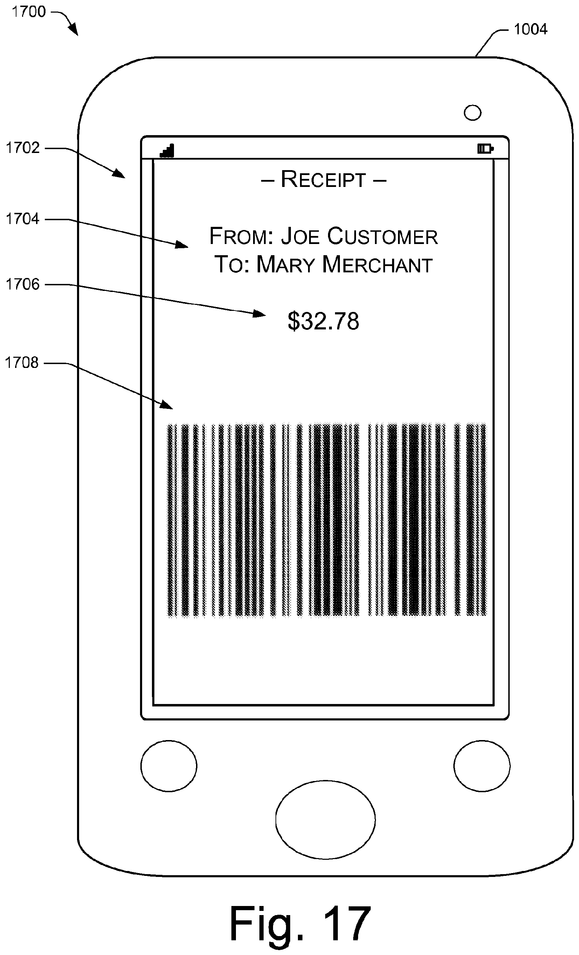

Fig. 17 shows an illustrative user interface 1700 on the mobile device 1004 displaying the receipt 1702 that similar to the receipt displayed in Fig. 16 includes an indication of the customer making the payment and the merchant receiving the payment 1704, the payment amount 1706 received by the financial account 1110, associated with the merchant 1006 and verification data 1106. However, in this user interface 1700 the verification data 1106 is machine-readable data shown here as a barcode 1708. Other types of machine-readable data may include QR codes and audio information.

The barcode 1708 may be read by the tag reader 1020 shown in Fig. 10. In this implementation, the customer 1002 may simply hold his or her mobile device 1004 in front of the tag reader 1020. The red or green light (or other signaling mechanism) on the tag reader 1020 informs the merchant 1006 if the barcode 1708 is valid verification data 1106 or not. The barcode 1708 may be a combination of the verification data 1106 provided from the merchant account 1202 and a transaction identifier for the specific transaction. The transaction identifier may be stored in memory 1022 associated with the tag reader 1020 so that subsequent use of the same transaction identifier is recognized by the tag reader 1020 as being invalid even when the verification data 1106 would otherwise be interpreted by the tag reader 1020 as valid. Thus, when a revocation list or similar record of previously used transaction identifiers is maintained in a memory 1022 associated with the tag reader 1020, the merchant 1006 may be able to prevent unauthorized reuse of a receipt 1702 including verification data 1106 without necessarily keeping the verification data 1106 secret from the customer 1002. In other words, in some implementations using machine-readable data such as the barcode 1708, it may be possible for the merchant 1006 to safely omit entering the PIN code as shown in Fig. 15. The memory 1022 associated with the tag reader 1020 may be cleared periodically (e.g., nightly) to make room for a new revocation list or may be cleared by the merchant 1006 pressing a button on the tag reader 1020 or otherwise instructing the memory 1022 or the tag reader 1020 erase all or part of the memory 1022.

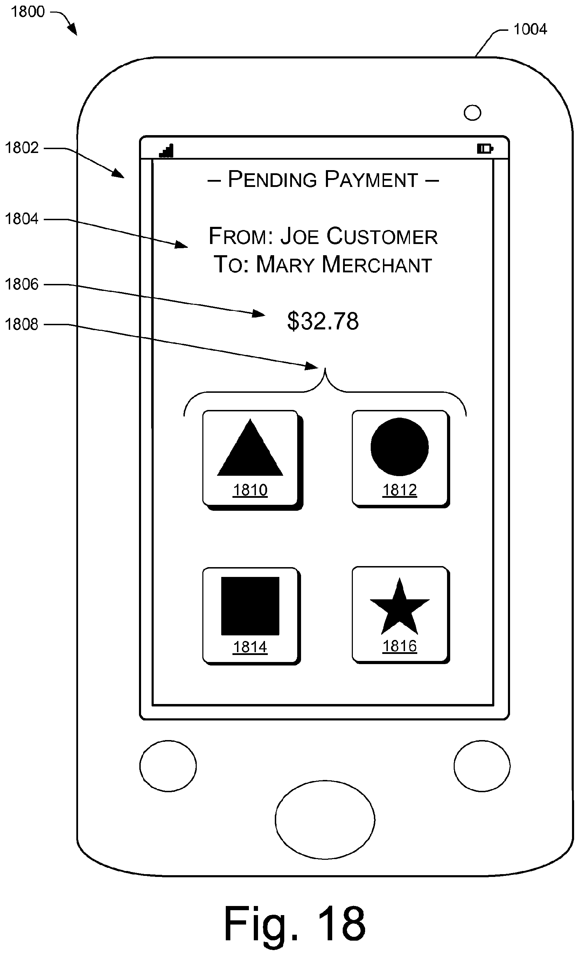

Fig. 18 shows an illustrative user interface 1800 on the mobile device 1004 displaying a pending payment 1802. Pending payment 1802 includes an indication of the customer making the payment and the merchant receiving the payment 1804. The pending payment 1802 also includes an indication of the payment amount 1806 received by the financial account 1110, associated with the merchant 1006. The pending payment 1802 may also include validation tags 1808. The validation tags 1808 may be images, symbols, text, pictures, or the like previously selected by the merchant 1006 and associated with verification data 1106. Here, four validation tags 1808 are shown as a triangle 1810, a circle 1812, a square 1814, and a star 1816. However, there may be greater or lesser number of validation tags 1808 included in the user interface 1800 and the each validation tag 1810-1816 may show something other than a geometric shape. Each of the validation tags 1810-1816 may correspond to a different piece of verification data 1106. The selection of which validation tags 1808 are included in the user interface 1800 may be random. The selection, random or otherwise, may be made by the network-accessible computing device(s) 1010.

The merchant 1006 may select one of the validation tags 1810-1816 by touching the corresponding image on the display of the mobile device 1004. However, the customer 1002 may wish to complete the transaction without handing his or her mobile device 1004 to the merchant 1006. The use of validation tags 1808 allows the customer 1002 to simply ask the merchant 1006 which tag he or she would like to select. The customer 1002 may then implement the merchant selection without giving the mobile device 1004 to the merchant 1006.

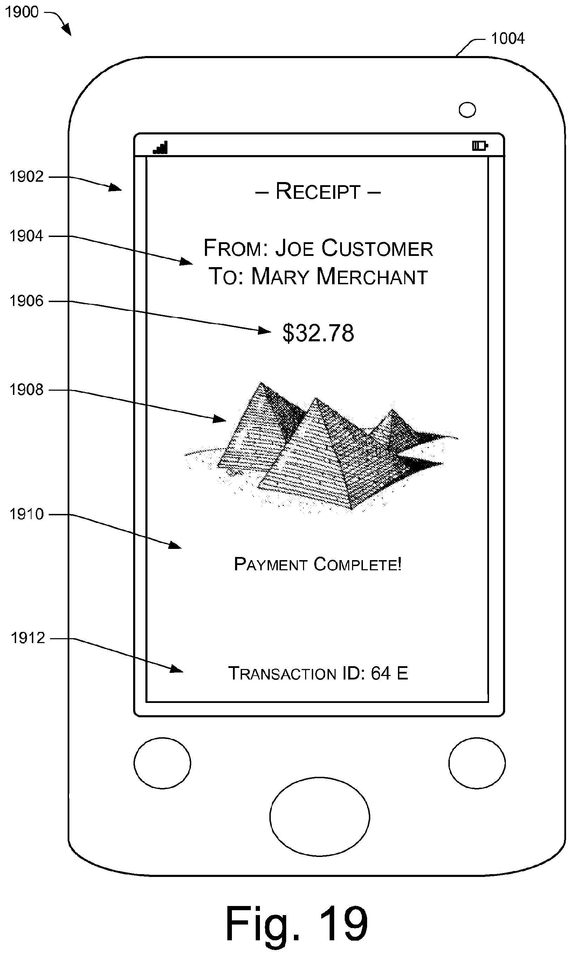

Fig. 19 shows an illustrative user interface 1900 on the mobile device 1004 displaying a receipt 1902 following selection of one of the validation tags 1808 shown in Fig. 18. In this example, the validation tag 1810 with the triangle symbol was selected. The receipt 1902 may again include an indication of the customer making the payment and the merchant receiving the payment 1904 and the payment amount 1906. This user interface 1900 additionally shows validation data 1106 represented here as an image of pyramids 1908. The merchant 1006 may have previously associated the triangle validation tag 1810 with this image of pyramids 1908. The merchant 1006 may also associate different images with each of the other validation tags 1812-1816. The merchant 1006 may select the correspondence between the triangle validation tag 1810 and the image of the pyramids 1908 because of the similarity in shape. However, the merchant 1006 is free to make create any correlation between a validation tag 1808 and an image or other type of validation data 1106.

The task of making these associations may be implemented automatically for the merchant 1006 by using data in or available to the merchant account 1102. For example, if the merchant account 1102 is associated with a social networking account of the merchant 1006, information from the social networking account may be used to create validation tag 1808 and validation data 1106 pairs. In one implementation, the names of people in the social network of the merchant 1006 may be used as the validation tags 1808, and when selected in the user interface 1800, the picture corresponding to that person may appear as the validation data 1106 in place of the pyramid image 1908. Presumably, the merchant 1006 can reliably match his or her friends' faces with their names, so this choice of validation tags 1808 and validation data 1106 provides a confirmation that is easy for the merchant 1006 to verify but may be difficult for others to fake. Other types of tag-data pairs presenting correlations that are recognizable to the merchant 1006 are also possible.

Given that it may be very unlikely the customer 1002 could have guessed which image (or other type of validation data 1106) the merchant 1006 chose to associate with the triangle validation tag 1810, display of the pyramids 1908 provides the merchant 1006 confidence that the payment amount 1906 was in fact deposited in his or her financial account 1110. This is because, the network-accessible computing devices 1010, for example the payment confirmation module 1210, may be configured to send the pyramid image 1908 only after the payment amount 1906 is successfully received by the merchant 1906.

However, it may be possible for one or more malicious individuals to collect data on the validation tag 1808 and corresponding validation data 1106 from multiple interactions with the merchant 1006. This may be used to create a mockup user interface designed to fool the merchant into thinking a payment was made when in fact it was not. The likelihood of this tactic being successful may be decreased by having a large pool of validation tags 1808 and validation data 1106. Random or round-robin selection of validation tags 1808 may make it unlikely that the merchant 1006 will be presented with the same validation tag 1808. Thus, if the same one or several validation tags 1808 are frequently displayed on the user interface 1800, the merchant 1006 may use that to recognize fraudulent behavior.

This receipt 1902 may also include an indication 1910 that the payment is completed. This indication 1910 may assist the merchant 1006 and the customer 1002 in knowing that it is appropriate to continue the transaction by, for example, delivering the item to the customer 1002. The receipt 1002 may also include a transaction identifier 1912.

The transaction identifier 1912 assigned to a transaction may increment according to a defined sequence. For example, the transaction identifiers 1912 may start at 1 and increase numerically or start with the letter "A" and increment alphabetically. In addition to the incremented segment, the transaction identifier 1912 may also include a check "digit" or other type of indication that the merchant may use as additional confirmation that the transaction identifier 1912 is genuine. Here the transaction identifier 1912 is "64 E." The numeric portion may represent that this is the 64^{th} transaction in a given time period (e.g., one-day) and the letter "E" may function as the check digit. For example, transaction identifiers 1912 may be generated such that even numbered transactions are accompanied by a vowel (e.g., 64 and E) while odd numbered transactions are accompanied by a consonant (e.g., 65 and B). This provides the merchant 1006 at least two ways to detect fraud. Specifically, if the merchant 1006 sees a transaction identifier 1912 that is out of order (e.g., 7 follows 64 or 64 is followed by 105) that may suggest a "fake" receipt 1902. Also, if the check digit does not match the formula for generating check digits (e.g., an even number is followed by a consonant) that can also suggest a "fake" receipt 1902.

The transaction identifier 1912 may also be recorded separately by the merchant 1006 (e.g., with pencil and paper) to use for later verification of the transaction. The merchant 1006 may access his merchant account 1102 from a desktop computer at a later time and use the transaction identifier 1912 to confirm that the payment for this transaction was placed in his or her financial account 1110 as, for example, part of settling the transactions and payments for a day.

### Illustrative Processes

The processes discussed below are illustrated as a collection of blocks in a logical flow graph, which represents a sequence of operations that can be implemented in hardware, software, or a combination thereof. In the context of software, the blocks represent computer-executable instructions stored on one or more computer-readable storage media that, when executed by one or more processors, perform the recited operations. Generally, computer-executable instructions include routines, programs, objects, components, data structures, and the like that perform particular functions or implement particular abstract data types. The order in which the operations are described is not intended to be construed as a limitation, and any number of the described blocks can be combined in any order and/or in parallel to implement the processes.

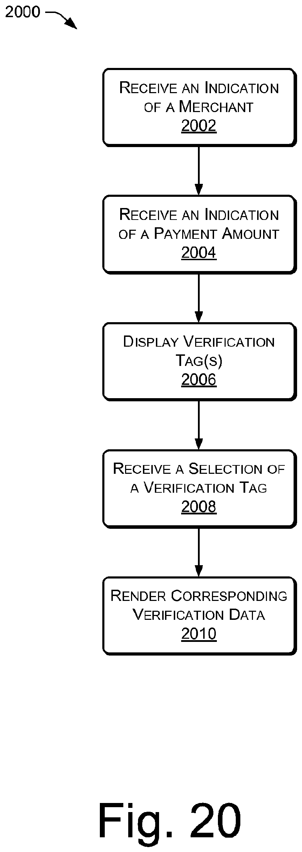

Fig. 20 shows an illustrative process 2000 for using verification tags 1808 and corresponding verification data 1106 to provide the merchant 1006 assurance that an electronic payment made from a customer's mobile device 1004 is a legitimate payment.

At 2002, an indication of the merchant 1006 is received. The indication may received by the customer 1004 entering the name of the merchant 1006 into the mobile device 1004, selecting the name of the merchant 1006 from a list displayed on the mobile device 1004, selecting the merchant 1006 from a map, or the like. In some implementations, the indication of the merchant 1006 may be received wholly or partially in an automated fashion such as based on comparison of a geolocation of the mobile device 1004 to a location of the merchant 1006, based on scanning a tag such as a barcode or QR tag present at the merchant 1006 that provides identity of the merchant to the mobile device 1004, obtaining the name of the merchant 1006 from a wireless network connection (e.g., WiFi hotspot), or the like.

At 2004, an indication of a payment amount to be made from the customer 1004 to the merchant 1006 is received. The indication may provided by the customer 1002 entering a payment amount via an input mechanism of the mobile device 1004. The indication may also be provided by the tag scanner 1316 of the mobile device 1004 scanning a tag that provides the payment amount (e.g., a QR code printed on a paper bill).

At 2006, verification tags 1808 such as the tags 1810-1816 shown in Fig. 18 may be displayed on the mobile device 1004. Prior to displaying the verification tags 1808, the mobile device 14 may obtain the verification tags 1808 from the merchant account 1102. In some implementations, the customer 1002 may show the mobile device 1004 to the merchant 1006 and asked the merchant 1006 which variation tag 1808 to select. Alternatively, the customer 1002 may simply describe the variation tags 1808 to the merchant 1006 without showing the variation tags 1808, or even the mobile device 1004, to the merchant 1006.

At 2008, a selection of one of the verification tags 1808 displayed in 101006 is received. The selection may be made by the customer 1002 pressing (or otherwise selecting) one of the verification tags 1808 based on instructions provided by the merchant 1006.

At 2010, verification data 1106 corresponding to the verification tag 1808 selected at 2008 is rendered by the mobile device 1004. When the merchant 1006 is able to observe the verification data 1106 that he or she expects to be correlated with the verification tag 1808, the merchant 1006 receives confirmation that the payment submitted by the mobile device 1004 was in fact received in the merchant's financial account 1110. The verification data 1106 may be visual data, audio data, or another type of data so the rendering provided at 2010 may include displaying visual data on a screen, playing audio data from a speaker, or otherwise rendering the verification data 1106 in a format appropriate for the merchant 1006 to recognize and consume the verification data 1106.

Figs. 12a and 12b show an illustrative process 2100 for using the mobile device 1004 of the customer 1002 to make a verifiable electronic payment from the customer 1002 to the merchant 1006. At 2102, the customer 1002 launches a payment application on his or her mobile device 1004. The payment application may establish a connection between the mobile device 1004 and the network-accessible computing device(s) 1010. The payment application may also log the customer 1002 into his or her customer account 1114.

At 2104, the customer 1002 selects the merchant 1006. The customer 1002 may select the merchant 1006 from a list of one or more merchants presented to the customer 1002 on the mobile device 1004. The selection may be implemented using a user interface similar to that shown in Fig. 14. The customer 1006 may also select the merchant 1006 from a map that displays one or more merchants 1006 in their respective locations on the map and may also display the location of the mobile device 1004. The customer 1002 input may be used to unambiguously identify the correct merchant 1006 to receive the electronic payment.

At 2106, the mobile device 1004 receives the selection of the merchant 1006 based on the input provided by the customer 1002 at 2104.

At 2108, the customer 1002 indicates an amount he or she wishes to pay the merchant 1006 for an item provided by the merchant 1006. The customer 1002 may indicate the payment amount before receiving an item (e.g., when purchasing an item at a merchant with a checkout lane) or the customer 1002 may enter the payment amount after receiving an item (e.g., after consuming a meal at the merchant 1006).

At 2110, the mobile device 1004 receives the indication of the payment amount to be provided to the merchant 1006.

At 2112, the mobile device 1004 may send, over the network 1008, instructions to transfer the payment amount from an account associated with the customer 1002 (e.g., financial account 1118) to an account associated with the merchant 1006 (e.g., financial account 1110). Receipt of the payment amount at 2110 and providing the payment instructions at 2112 may be implemented by the payment module 1314.

At 2114, mobile device 1004 receives a receipt for the payment amount. The receipt may include verification data 1106 previously selected by the merchant 1006 and an authentication challenge 1108 for accessing the verification data 1106. An illustrative receipt is shown in Fig. 16. The receipt may be provided by the network-accessible computing device(s) 1010 in response to the merchant 1006 (i.e., the financial account 1110 associated with the merchant 1006) receiving the payment amount. Although the mobile device 1004 has received the receipt at 2114, the receipt may remain concealed or not displayed on the mobile device 1004 at this point.

At 2116, the merchant 1006 provides a response to the authentication challenge 1108 received at 2114. Since the merchant 1006 previously designated the authentication challenge 1108 (e.g., his or her PIN code) the merchant 1006 will be able to provide a valid response.

At 2118, a valid response to the authentication challenge 1108 is received by the mobile device 1004.

At 2120, in response to receiving the valid response, the verification data 1106 may be presented to the merchant 1006 on the mobile device 1004. Presentation of the verification data 1106 may be implemented by showing a picture, showing a text string, playing a sound, displaying a machine-readable code, or the like. The merchant 1006 is able to observe the verification data 1106, and thereby, verify that other information included in the receipt is authentic.

At 2122, the merchant 1006, may check the verification data 1106 and provide an indication that the item for which the payment was received was provided to the customer 1002.

At 2124, the mobile device 1004 receives the indication from the merchant 1006 that the item was provided to the customer 1002. The mobile device 1004 may then close out the transaction by sending a notification to the customer account 314 that this transaction is completed. The notification may include receipt information other than the merchant's verification data 1106 (e.g., price, identity of the item, date and time).

At 2126, the merchant 1006 may additionally input a command to block subsequent presentation of the verification data 1106 on the mobile device 1004. The blocking may be implemented by instructions to the payment application on the mobile device 1004, by encrypting the verification data 1106, by deleting the verification data 1106 from the mobile device 1004, or by another technique that prevents subsequent presentation of the verification data 1106 even if a valid response to the authentication challenge 1108 is subsequently received by the mobile device 1004.

At 2128, the mobile device 1004 receives a command to block subsequent presentation of the verification data 1106.

At 2130, the mobile device 1004 blocks subsequent presentation of the verification data 1106 so that a subsequent valid response to the authentication challenge 1108 does not cause a subsequent presentation of the verification data.

Although the subject matter has been described in language specific to structural features and/or methodological acts, it is to be understood that the subject matter defined in the appended claims is not necessarily limited to the specific features or acts described. Rather, the specific features and acts are disclosed as illustrative forms of implementing the claims.

### Clauses

Embodiments of the disclosure can be described in view of the following clauses:
Clause 1. A computer-implemented method comprising:
   under control of a network-accessible point-of-sale (POS) device assigned to a merchant location but located remote from the merchant location, the network-accessible POS device configured with executable instructions,
   receiving a selection of a good or service available at the merchant location, the selection made by a user of a mobile computing device while the goods and services available at the merchant are displayed on the mobile computing device and while the user and the mobile computing device are located at the merchant location;
   receiving payment information from the mobile computing device, the payment information entered by the user into the mobile computing device to pay for the good or service;
   presenting the payment information to a payment processor;
   receiving confirmation from the payment processor that the payment information is associated with sufficient funds to pay for the good or service;
   responsive to receiving the confirmation, generating a receipt that includes validation data based at least in part on seed information provided by a merchant operating the merchant location and an indication of the good or service; and
   sending the receipt to the mobile computing device for display by the user of the mobile computing device to the merchant as evidence of payment for the good or service.
Clause 2. A computer-implemented method comprising:
   under control of a network-accessible point-of-sale (POS) device assigned to a merchant location but located remote from the merchant location, the network-accessible POS device configured with executable instructions,
   receiving a scan of a tag associated with a good or service available at the merchant location, the scan generated by a mobile computing device while a user of the mobile computing device and the mobile computing device are located at the merchant location;
   receiving a user identifier that uniquely identifies the user of the mobile computing device;
   using the user identifier to obtain previously stored payment information associated with the user to pay for the good or service;
   presenting the payment information to a payment processor;
   receiving confirmation from the payment processor that the payment information is associated with sufficient funds to pay for the good or service;
   responsive to receiving the confirmation, generating a receipt that identifies the good or service; and
   sending the receipt to the mobile computing device and to a computing device of a merchant operating the merchant location so that matching the receipt on the computing device of the merchant with the receipt on the mobile computing device to provides evidence of payment for the good or service.
Clause 3. A network-accessible point-of-sale (POS) device comprising:
   one or more processors;
   a network interface;
   computer-readable media coupled to the one or more processors, the computer-readable media comprising:
      a merchant location assignment module configured to associate the POS device with a merchant location remote from a physical location of the POS device;
      a purchase module configured to receive, via the network interface, a purchase request from a customer-operated device located at the merchant location, the purchase request comprising payment information and an identification of a good or service;
      a payment module configured to provide payment information to a payment processor and receive an authorization from the payment processor to fulfill the purchase request; and
      a receipt generation module configured to generate a receipt evidencing the authorization from the payment processor and identifying the good or service.
Clause 4. The POS device as recited in clause 3, wherein the merchant location assignment module exclusively associates the POS device with the merchant location.
Clause 5. The POS device as recited in clause 3, wherein the merchant location assignment module associates the POS device with the merchant location for a time period based at least in part on a volume of transactions occurring or estimated to occur at the merchant location during the time period.
Clause 6. The POS device as recited in any one of clauses 3 to 5, wherein the merchant location assignment module establishes a secure connection between the POS device and a merchant network maintained by a merchant operating the merchant location so that the POS device functions as a part of the merchant network.
Clause 7. The POS device as recited in any one of clauses 3 to 6, wherein the payment information comprises payment information entered by a user of a customer-operated device at a time of the purchase request, payment information previously stored in a memory of the customer-operated device, or payment information available via a network and associated with the customer-operated device by a user identifier stored in a memory of the customer-operated device.
Clause 8. The POS device as recited in any one of clauses 3 to 7, wherein the identification of the good or service comprises a scan generated by the customer-operated device of a tag associated with the good or service, a selection of the good or service from a list displayed on the customer-operated device, or a code entered into the customer-operated device.
Clause 9. The POS device as recited in any one of clauses 3 to 8, wherein the receipt generation module sends the receipt to the customer-operated device and the receipt includes validation data based at least in part on information provided by a merchant associated with the merchant location.
Clause 10. The POS device as recited in clause 9, wherein the information is changed at a frequency specified by the merchant.
Clause 11. The POS device as recited in any one of clauses 3 to 8, wherein the receipt generation module sends the receipt to the customer-operated device and to a computing device of a merchant operating the merchant location.
Clause 12. The POS device as recited in any one of clauses 3 to 11, wherein the computer-readable media further comprises a security module configured to receive an indication of a location of the customer-operated device, compare the location of the customer-operated device to the merchant location, and when the location of the customer-operated device is more than a threshold distance from the merchant location prevent the customer-operated device from completing a purchase with a merchant operating the merchant location.
Clause 13. One or more computer-readable media storing computer-executable instructions stored at least partly on a network-accessible computing device located remote from a merchant location and uniquely associated with the merchant location, the computer-executable instructions configured to cause one or more processors of the network-accessible computing device to perform acts comprising:
   receiving a purchase request via a network from a customer-operated device at the merchant location, the purchase request comprising payment information and an identification of a good or service;
   sending the payment information to a payment processor;
   receiving authorization from the payment processor;
   generating receipt data evidencing receipt of payment and identifying the good or service; and
   sending the receipt data via the network to the customer-operated device.
Clause 14. The computer-readable storage media as recited in clause 13, wherein the customer-operated device comprises a mobile computing device associated with a customer.
Clause 15. The computer-readable storage media as recited in clause 13, wherein the customer-operated device comprises a mobile computing device maintained by the merchant at the merchant location for use by customers.
Clause 16. The computer-readable storage media as recited in any one of clauses 13 to 15, wherein the identification of the good or service comprises a code entered into the customer-operated device, the code designated by a merchant operating the merchant location as corresponding to the good or service.
Clause 17. The computer-readable storage media as recited in any one of clauses 13 to 16, wherein the payment information comprises a credit card number, a debit card number, a bank routing number, or a prepaid account identifier of a prepaid account associated with the merchant location.
Clause 18. The computer-readable storage media as recited in any one of clauses 13 to 17, wherein sending the payment information to the payment processor comprises sending payment information using an application programming interface (API) associated with the payment processor, the payment processor identified at least in part by the payment information.
Clause 19. The computer-readable storage media as recited in any one of clauses 13 to 18, wherein generating the receipt data comprises generating a receipt that includes validation data indicating authenticity of the receipt.
Clause 20. The computer-readable storage media as recited in any one of clauses 13 to 19, wherein sending the receipt data further comprises sending the receipt data via the network to a computing device of a merchant associated with the merchant location.
Clause 21. A computer-implemented method comprising:
   under control of a mobile computing device configured with executable instructions,
   receiving, from a user of the mobile computing device at a merchant location, an identity of a good or service available from a merchant at the merchant location;
   receiving an instruction from the user to send, via a network, the identity of the good or service and payment information to a network-accessible point-of-sale (POS) device associated with the merchant location and located remote from the merchant location; and
   responsive to receiving authorization from the network-accessible POS device, causing display of a receipt on the mobile computing device, the receipt received via the network from the POS device and indicating that a user associated with the mobile device has paid for the identified good or service, wherein the receipt when displayed to the merchant and validated by the merchant results in the user receiving the good or service from the merchant.
Clause 22. The method as recited in clause 21, wherein receiving the identity comprises receiving an image of a tag associated with the good or service captured using a camera of the mobile computing device.
Clause 23. The method as recited in any one of clauses 21 or 22, wherein the mobile computing device comprises a smart phone, a tablet computer, or a personal digital assistant.
Clause 24. The method as recited in any one of clauses 21 to 23, wherein the network comprises a wireless network.
Clause 25. The method as recited in any one of clauses 21 to 24, wherein a timing of the causing display of the receipt on the mobile computing device is selected by the user associated with the mobile computing device.
Clause 26. The method as recited in any one of clauses 21 to 25, wherein the receipt enables the merchant to identify a match between the receipt displayed on the mobile computing device and a receipt displayed on a computing device of the merchant.
Clause 27. The method as recited in any one of clauses 21 to 26 further comprising receiving an indication to invalidate the receipt so that the receipt is no longer valid for the good or service.
Clause 28. A method comprising:
   under control of a mobile device configured with executable instructions,
   receiving, from a customer, a selection of a merchant from a list of one or more merchants presented to the customer on the mobile device;
   receiving, from the customer, an indication of a payment amount for an item provided by the merchant;
   sending, from the mobile device and over a network, an instruction to transfer the payment amount from an account associated with the customer to an account associated with the merchant;
   at least partly responsive to the account associated with the merchant receiving the payment amount from the account associated with the customer, receiving, via the network, a receipt for the payment amount, verification data previously selected by the merchant, and an authentication challenge for accessing the verification data;
   receiving, from the merchant, a valid response to the authentication challenge;
   at least partly responsive to receiving the valid response, presenting the verification data to the merchant;
   receiving, from the merchant, an indication that the item was provided to the customer;
   receiving, from the merchant, a command to block subsequent presentation of the verification data; and
   at least partly responsive to the command, blocking subsequent presentation of the verification data so that a subsequent valid response to the authentication challenge does not cause a subsequent presentation of the verification data.
Clause 29. The method as recited in clause 28, wherein each of the one or more merchants included in the list of the one or more merchants is selected based at least in part on having a name that matches at least in part a name entered by the customer into the mobile device or being within a predefined distance of a location of the mobile device.
Clause 30. The method as recited in any one of clauses 28 or 29, wherein the validation data is changed by the merchant at a regular frequency specified by the merchant.
Clause 31. The method as recited in any one of clauses 28 to 30, wherein a single input from the merchant comprises both the indication that the item was provided to the customer and the command to block subsequent presentation of the verification data.
Clause 32. A method comprising:
   under control of a mobile device configured with executable instructions,
   receiving an indication of a merchant;
   receiving an indication of a payment amount to pay the merchant;
   receiving over a network one or more verification tags from a network-accessible computing device, each of the one or more verification tags corresponding with verification data;
   displaying at least one of one or more verification tags, wherein the one or more the verification tags, the verification data, and the correspondence between the one or more verification tags and the verification data are based at least in part on information previously provided by the merchant to the network-accessible computing device;
   receiving a selection of one of the one or more verification tags; and
   rendering the corresponding verification data for the selected one of the verification tags.
Clause 33. The method as recited in clause 32, wherein the indication of the merchant is based at least in part on an input provided by the customer to the mobile device or a location of the mobile device.
Clause 34. The method as recited in any one of clauses 32 or 33, wherein the indication of the amount to pay the merchant is based at least in part on an input provided by the customer to the mobile device or a value detected by a tag scanner of the mobile device.
Clause 35. The method as recited in any one of clauses 32 to 34, wherein the verification tags comprise names of people, the verification data comprises photographs of people, and the verification tag comprising the name of one of the people corresponds to a photograph of the one of the people.
Clause 36. One or more computer-readable media storing computer-executable instructions configured to cause one or more processors to:
   receive an identification of a merchant to receive a payment;
   receive, from a customer, an identification of a payment amount to pay the merchant;
   send an instruction for an account associated with the customer to transfer the payment amount to an account associated with the merchant;
   receive verification data that the account associated with the merchant received the payment amount; and
   render, on a mobile device of the customer, the verification data for presentation to the merchant.
Clause 37. The computer-readable storage media as recited in clause 36, wherein receiving the identification of the merchant comprises receiving a merchant identifier entered by the customer, receiving data obtained at least in part from a scan of a machine-readable tag, or receiving a geographic location of the merchant.
Clause 38. The computer-readable storage media as recited in any one of clauses 36 or 37, wherein the payment amount is determined based at least in part on a payment amount entered by the customer.
Clause 39. The computer-readable storage media as recited in any one of clauses 36 to 38, wherein the verification data comprises data previously selected by the merchant.
Clause 40. The computer-readable storage media as recited in any one of clauses 36 to 39, wherein the verification data comprises text, a picture, a sound, a video, or a haptic response.
Clause 41. The computer-readable storage media as recited in any one of clauses 36 to 40, wherein the verification data comprises a recent purchase history of the merchant, a list of contacts of the merchant, or a social graph of connections of the merchant in one or more social networks.
Clause 42. The computer-readable storage media as recited in any one of clauses 36 to 41, wherein the verification data comprises machine-readable data which, when read by a device at the merchant, indicates if the verification data is valid or invalid.
Clause 43. The computer-readable storage media as recited in clause 42, wherein the verification data further comprises a transaction identifier that, when read by the device at the merchant, is stored in computer-readable media associated with the device at the merchant such that subsequent reading of the verification data associated with the same transaction identifier is indicated as invalid by the device at the merchant.
Clause 44. The computer-readable storage media as recited in any one of clauses 36 to 43, wherein the computer-executable instructions are further configured to cause the one or more processors to:
   receive, from the merchant at a mobile device of the customer, a confirmation of the payment.
Clause 45. The computer-readable storage media as recited in any one of clauses 36 to 44, wherein the computer-executable instructions are further configured to cause the one or more processors to:
   receive an authentication challenge for accessing the verification data;
   determine when a response to the authentication challenge is valid; and
   render the verification data when the response is determined to be valid.
Clause 46. The computer-readable storage media as recited in clause 45, wherein the authentication challenge comprises a request to provide a password, a personal identification number (PIN), a physical gesture, a spoken phrase, or a biometric identifier.
Clause 47. The computer-readable storage media as recited in any one of clauses 36 to 46, wherein the computer-executable instructions are further configured to cause the one or more processors to:
   receive, from the merchant, a command to block subsequent rendering of the verification data; and
   at least partly responsive to the command, blocking subsequent rendering of the verification data.
Clause 48. The computer-readable storage media as recited in any one of clauses 36 to 47, wherein the rendering of the verification data comprises rendering the verification data as a portion of a receipt indicating the payment amount.
Clause 49. A mobile device comprising:
   one or more processors;
   computer-readable media coupled to the one or more processors;
   a merchant identification module stored in the computer-readable media and configured to receive information identifying a merchant;
   a payment module stored in the computer-readable media and configured to receive an indication of a payment amount and provide instructions to transfer the payment amount from an account associated with the mobile device to an account associated with the merchant;
   a verification data module stored in the computer-readable media and configured to receive verification data indicating that the account associated with the merchant received the payment amount and an authentication challenge associated with the verification data; and
   a merchant authentication module stored in the computer-readable media and configured to receive a response to the authentication challenge and, at least partially responsive to receiving a valid response, render the verification data.
Clause 50. The mobile device as recited in clause 49, wherein the mobile device comprises a smart phone, a personal digital assistant, a media player, a portable gaming device, an eBook reader, or a tablet computer.
Clause 51. The mobile device as recited in any one of clauses 49 or 50, further comprising a location sensor coupled to the one or more processors and configured to detect a geolocation of the mobile device, wherein the merchant identification module is further configured to identify the merchant based at least in part by comparing the geolocation of the mobile device to a location of the merchant.
Clause 52. The mobile device as recited in any one of clauses 49 to 51, further comprising a tag scanner coupled to the one or more processors and configured to identify a merchant based at least in part on data obtained from a tag scanned by the tag scanner and provide the data identifying the merchant to the merchant identification module.
Clause 53. The mobile device as recited in clause 52, wherein the tag scanner comprises a camera, a reflected light scanner, or an antenna configured to receive signals from radio frequency identification (RFID) tags.
Clause 54. A system comprising:
   one or more processors;
   computer-readable media coupled to the one or more processors;
   one or more network interfaces coupled to the one or more processors;
   a merchant account record stored in the computer-readable media including an identity of a merchant, verification data, and an authentication challenge;
   a transaction processing module stored in the computer-readable media and configured to receive, via the one or more network interfaces, a request from a mobile device of a customer to transfer a payment amount from a financial account associated with the customer to a financial account associated with the merchant; and
   a payment confirmation module stored in the computer-readable media and configured to send, via the one or more network interfaces, the verification data and the authentication challenge to the mobile device at least partly in response to receiving an indication that the financial account associated with the merchant received the payment amount from the financial account associated with the customer, the verification data remaining concealed on the mobile device until a valid response to the authentication challenge is provided on the mobile device.
Clause 55. The system of clause 54, further comprising an encryption module stored in the computer-readable media and configured to encrypt the verification data with a private key of the merchant for decryption by a corresponding public key of the merchant on the mobile device.
Clause 56. The system of clause 54, further comprising an encryption module stored in the computer-readable media and configured to encrypt the verification data so that a device at the merchant other than the mobile device is able to decrypt the verification data and the mobile device is not able to decrypt the verification data.
Clause 57. The system of any one of clauses 54 to 56, further comprising a customer account record stored in the computer-readable media and comprising an identity of the customer and the financial account associated with the customer, and wherein the merchant account record comprises an identity of the financial account associated with the merchant.

## Claims

1. A computer-implemented method comprising:
under control of a network-accessible point-of-sale (POS) device (116) associated with a merchant location (106) but located remote from the merchant location, the network- accessible POS device configured with executable instructions,
receiving at the network-accessible POS device a purchase request, the purchase request received via a network (112) from a mobile computing device (104) located at the merchant location, the purchase request comprising payment information (120) or an indication of payment information and an identification of a good or a service available (108) from a merchant (124) associated with the merchant location;
in response to receiving the purchase request, sending the payment information and a cost associated with the good or the service to a payment processor (118);
in response to receiving an authorization from the payment processor, generating receipt data evidencing receipt of payment and identifying the good or the service; and
sending the receipt data via the network to the mobile computing device,
wherein the receipt data, when presented to the merchant via the mobile computing device and validated by the merchant, results in a user associated with the mobile computing device receiving the good or the service from the merchant,
wherein the receipt data includes verification data that indicates the authenticity of the receipt data, the verification data based at least in part on information provided by the merchant associated with the merchant location, and
wherein the merchant (124) provides a command to block presentation of the verification data and, at least partly responsive to the command, subsequent presentation of the verification data is blocked.

2. The method as recited in claim 1, wherein the identification of the good or the service (108) comprises
a scan generated by the mobile computing device (104) of a tag (110) associated with the good or service,
a selection of the good or the service from a list presented via the mobile computing device, or a code entered into the mobile computing device,
the purchase request includes a user identifier that uniquely identifies the user (102) associated with the mobile computing device and the user identifier is used to obtain previously stored payment information (120) associated with the user to pay for the good or the service, and
the payment information comprises a credit card number, a debit card number, a bank routing number, or a prepaid account identifier of a prepaid account associated with the merchant location (106).

3. The method as recited in claim 1, wherein the network-accessible POS device (116) is exclusively associated with the merchant location (106) for a time period based at least in part on a volume of transactions occurring or estimated to occur at the merchant location during the time period.

4. The method as recited in claim 1, further comprising:
sending the receipt data to a computing device associated with the merchant (124), wherein matching the receipt data on the computing device associated with the merchant with the receipt data on the mobile computing device (104) provides evidence of payment for the good or service (108).

5. The method as recited in claim 1, further comprising:
receiving an indication of a location of the mobile computing device (104);
comparing the location of the mobile computing device to the merchant location (106); and
in response to determining that the location of the mobile computing device is more than a threshold distance from the merchant location, preventing the mobile computing device from completing a purchase of the good or the service (108) from the merchant (124) associated with the merchant location.

6. The method as recited in claim 1, wherein the mobile computing device (104) comprises a mobile computing device associated with the user or a mobile computing device maintained by the merchant (124) at the merchant location (106) for use by customers.

7. The method as recited in claim 1, further comprising:
sending, via the network (112), an authentication challenge to the mobile computing device (104), wherein the verification data remains concealed on the mobile device until a valid response to the authentication challenge is provided on the mobile computing device by the merchant (124).

8. The method as recited in claim 7, wherein a subsequent valid response to the authentication challenge does not cause a subsequent presentation of the verification data.

9. The method as recited in claim 1, wherein the verification data comprises one or more of:
(1) data previously selected by the merchant (124),
(2) text, a picture, a sound, a video, or a haptic response, or
(3) a recent purchase history of the merchant, a list of contacts of the merchant, or a social graph of connections of the merchant in one or more social networks.

10. The method as recited in claim 1, wherein the verification data comprises machine-readable data that, when read by a device at the merchant (124), indicates whether the verification data is valid or invalid and wherein the verification data further comprises a transaction identifier that, when read by the device at the merchant, is stored in computer-readable media associated with the device at the merchant such that subsequent reading of the verification data associated with the same transaction identifier is indicated as invalid by the device at the merchant.

11. The method as recited in claim 1, further comprising:
receiving, via the network (112), a selection of the merchant (124), wherein the merchant is selected by the user of the mobile computing device (104) from a list of one or more merchants presented to the user (102) on the mobile computing device (104),
and wherein each of the one or more merchants included in the list of the one or more merchants is selected based at least in part on having a name that matches at least in part a name entered by the user into the mobile computing device or being within a predefined distance of a location of the mobile device.

12. The method as recited in claim 1, wherein the payment information (120) or the indication of payment information is based at least in part on an input provided by the user (102) to the mobile computing device (104) or a value detected by a tag scanner of the mobile computing device.

13. The method as recited in claim 1, wherein the verification data is encrypted with a private key of the merchant for decryption by a corresponding public key of the merchant on the mobile computing device (104) or wherein the verification data is encrypted so that a device at the merchant other than the mobile computing device is able to decrypt the verification data and the mobile computing device is not able to decrypt the verification data.

14. A computer-implemented method comprising:
under control of a mobile computing device (104) configured with executable instructions,
receiving, from a user (102) of the mobile computing device at a merchant location (106), an identification of a good or service (108) available from a merchant (124) at the merchant location;
receiving an instruction from the user to send, via a network (112), a purchase request to a network-accessible point-of-sale (POS) device (116) associated with the merchant location and located remote from the merchant location, the purchase request comprising payment information (120) or an indication of payment information and the identification of the good or service available from the merchant associated with the merchant location; and
responsive to receiving receipt data from the network-accessible POS device, causing display of a receipt on the mobile computing device, the receipt data received via the network from the POS device and indicating that a user associated with the mobile computing device has paid for the identified good or service,
wherein the receipt when displayed to the merchant and validated by the merchant results in the user receiving the good or service from the merchant,
wherein the receipt data includes verification data that indicates the authenticity of the receipt data, the verification data based at least in part on information provided by the merchant associated with the merchant location, and
wherein the merchant (124) provides a command to block subsequent presentation of the verification data and, at least partly responsive to the command, subsequent presentation of the verification data is blocked.

15. A mobile computing device (104) configured with executable instructions to:
receive, from a user (102) of the mobile computing device at a merchant location (106), an identification of a good or service (108) available from a merchant (124) at the merchant location;
receive an instruction from the user to send, via a network (112), a purchase request to a network-accessible point-of-sale (POS) device (116) associated with the merchant location and located remote from the merchant location, the purchase request comprising payment information (120) or an indication of payment information and the identification of the good or service available from the merchant associated with the merchant location; and
responsive to receiving receipt data from the network-accessible POS device, cause the display of a receipt on the mobile computing device, the receipt data received via the network from the POS device and indicating that a user associated with the mobile computing device has paid for the identified good or service,
wherein the receipt when displayed to the merchant and validated by the merchant results in the user receiving the good or service from the merchant,
wherein the receipt data includes verification data that indicates the authenticity of the receipt data, the verification data based at least in part on information provided by the merchant associated with the merchant location, and
wherein the merchant (124) provides a command to block subsequent presentation of the verification data and, at least partly responsive to the command, subsequent presentation of the verification data is blocked.

## Patentansprüche

1. Computerimplementiertes Verfahren, umfassend:
unter der Steuerung einer netzwerkzugänglichen Verkaufspunkt- bzw. POS-Vorrichtung (116), assoziiert mit einem Handelsort (106), aber entfernt von dem Handelsort angeordnet, wobei die netzwerkzugängliche POS-Vorrichtung mit ausführbaren Anweisungen konfiguriert ist,
Empfangen, an der netzwerkzugänglichen POS-Vorrichtung, einer Kaufanforderung, die Kaufanforderung empfangen über ein Netzwerk (112) von einer mobilen Berechnungsvorrichtung (104), angeordnet an dem Handelsort, die Kaufanforderung umfassend Zahlungsinformationen (120) oder eine Angabe von Zahlungsinformationen und eine Identität einer verfügbaren Ware oder eines verfügbaren Dienstes (108), von einem mit dem Handelsort assoziierten Händler (124);
als Reaktion auf Empfangen der Kaufanforderung Senden der Zahlungsinformationen und von mit der Ware oder dem Dienst assoziierten Kosten an einen Zahlungsprozessor (118);
als Reaktion auf Empfangen einer Autorisierung von dem Zahlungsprozessor Erzeugen von Eingangsdaten, die den Eingang der Zahlung belegen und die Ware oder den Dienst identifizieren; und
Senden der Eingangsdaten über das Netzwerk an die mobile Berechnungsvorrichtung,
wobei die Eingangsdaten, wenn sie dem Händler über die mobile Berechnungsvorrichtung präsentiert und durch den Händler validiert werden, darin resultieren, dass ein mit der mobilen Berechnungsvorrichtung assoziierter Benutzer die Ware oder den Dienst von einem Händler empfängt,
wobei die Eingangsdaten Verifizierungsdaten enthalten, die die Authentizität der Eingangsdaten angeben, wobei die Verifizierungsdaten mindestens teilweise auf Informationen basieren, die durch den mit dem Handelsort assoziierten Händler bereitgestellt werden, und
wobei der Händler (124) einen Befehl zum Blockieren der Präsentation der Verifizierungsdaten bereitgestellt und, mindestens teilweise als Reaktion auf den Befehl, die anschließende Präsentation der Verifizierungsdaten blockiert wird.

2. Verfahren nach Anspruch 1, wobei die Identifizierung der Ware oder des Dienstes (108) umfasst
eine Abtastung, erzeugt durch die mobile Berechnungsvorrichtung (104), einer mit der Ware oder dem Dienst assoziierten Markierung (110),
eine Auswahl der Ware oder des Dienstes aus einer über die mobile Berechnungsvorrichtung bereitgestellten Liste oder einen in die mobile Berechnungsvorrichtung eingegebenen Code,
wobei die Kaufanforderung eine Benutzerkennung enthält, die den mit der mobilen Berechnungsvorrichtung assoziierten Benutzer (102) eindeutig identifiziert, und die Benutzerkennung zum Erhalten von mit dem Benutzer assoziierten vorher gespeicherten Zahlungsinformationen (120) verwendet wird, um die Ware oder den Dienst zu bezahlen, und
wobei die Zahlungsinformationen eine Kreditkartennummer, eine Debitkartennummer, eine Bankleitzahl oder eine Prepaid-Konto-Kennung eines Prepaid-Kontos, assoziiert mit dem Handelsort (106), enthalten.

3. Verfahren nach Anspruch 1, wobei die netzwerkzugängliche POS-Vorrichtung (116) für eine Zeitperiode, die mindestens teilweise auf einem Transaktionsvolumen basiert, das während der Zeitperiode an dem Handelsort vorkommt oder von dem geschätzt wird, dass es vorkommt, mit dem Handelsort (106) exklusiv assoziiert ist.

4. Verfahren nach Anspruch 1, ferner umfassend:
Senden der Eingangsdaten an eine mit dem Händler (124) assoziierte Berechnungsvorrichtung, wobei Abgleichen der Eingangsdaten in der mit dem Händler assoziierten Berechnungsvorrichtung mit den Eingangsdaten in der mobilen Berechnungsvorrichtung (104) einen Beleg der Zahlung für die Ware oder den Dienst (108) bereitstellt.

5. Verfahren nach Anspruch 1, ferner umfassend:
Empfangen einer Angabe eines Orts der mobilen Berechnungsvorrichtung (104);
Vergleichen des Orts der mobilen Berechnungsvorrichtung mit dem Handelsort (106); und
als Reaktion auf Bestimmen, dass der Ort der mobilen Berechnungsvorrichtung mehr als eine Schwellenwertdistanz von dem Handelsort entfernt ist, Verhindern, dass die mobile Berechnungsvorrichtung einen Kauf der Ware oder des Dienstes (108) von dem mit dem Handelsort assoziierten Händler (124) abschließt.

6. Verfahren nach Anspruch 1, wobei die mobile Berechnungsvorrichtung (104) eine mit dem Benutzer assoziierte mobile Berechnungsvorrichtung oder eine durch den Händler (124) an dem Handelsort (106) zur Verwendung durch Kunden unterhaltene mobile Berechnungsvorrichtung umfasst.

7. Verfahren nach Anspruch 1, ferner umfassend:
Senden, über das Netzwerk (112), einer Authentifizierungsaufforderung an die mobile Berechnungsvorrichtung (104), wobei die Verifizierungsdaten in der mobilen Vorrichtung verborgen bleiben, bis eine gültige Antwort auf die Authentifizierungsaufforderung an der mobilen Berechnungsvorrichtung durch den Händler (124) bereitgestellt wird.

8. Verfahren nach Anspruch 7, wobei eine anschließende gültige Antwort auf die Authentifizierungsaufforderung eine anschließende Präsentation der Verifizierungsdaten nicht bewirkt.

9. Verfahren nach Anspruch 1, wobei die Verifizierungsdaten eines oder mehrere von Folgendem umfassen:
(1) vorher durch den Händler (124) ausgewählte Daten,
(2) einen Text, ein Bild, einen Ton, ein Video oder eine haptische Antwort oder
(3) eine jüngste Kaufhistorie des Händlers, eine Liste von Kontakten des Händlers oder ein soziales Schaubild von Verbindungen des Händlers in einem oder mehreren sozialen Netzwerken.

10. Verfahren nach Anspruch 1, wobei die Verifizierungsdaten maschinenlesbare Daten umfassen, die, wenn sie durch eine Vorrichtung bei dem Händler (124) gelesen werden, angeben, ob die Verifizierungsdaten gültig oder ungültig sind, und wobei die Verifizierungsdaten ferner eine Transaktionskennung umfassen, die, wenn sie durch die Vorrichtung bei dem Händler gelesen wird, in mit der Vorrichtung bei dem Händler assoziierten computerlesbaren Medien derart gespeichert wird, dass anschließendes Lesen der mit derselben Transaktionskennung assoziierten Verifizierungsdaten durch die Vorrichtung bei dem Händler als ungültig angegeben wird.

11. Verfahren nach Anspruch 1, ferner umfassend:
Empfangen, über das Netzwerk (112), einer Auswahl des Händlers (124), wobei der Händler durch den Benutzer der mobilen Berechnungsvorrichtung (104) aus einer Liste mit einem oder mehreren Händlern, die dem Benutzer (102) an der mobilen Berechnungsvorrichtung (104) präsentiert wird, ausgewählt wird,
und wobei jeder des einen oder der mehreren Händler, die in der Liste mit dem einen oder den mehreren Händlern enthalten sind, mindestens teilweise basierend darauf ausgewählt wird, dass er einen Namen hat, der mindestens teilweise mit einem Namen übereinstimmt, der durch den Benutzer in die mobile Berechnungsvorrichtung eingegeben wird, oder dass er innerhalb einer im Voraus definierten Distanz von einem Ort der mobilen Vorrichtung ist.

12. Verfahren nach Anspruch 1, wobei die Zahlungsinformationen (120) oder die Angabe der Zahlungsinformationen mindestens teilweise auf einer durch den Benutzer (102) der mobilen Berechnungsvorrichtung (104) bereitgestellten Eingabe oder einem durch einen Markierungsabtaster der mobilen Berechnungsvorrichtung detektierten Wert basieren.

13. Verfahren nach Anspruch 1, wobei die Verifizierungsdaten mit einem privaten Schlüssel des Händlers für Entschlüsselung durch einen korrespondierenden öffentlichen Schlüssel des Händlers in der mobilen Berechnungsvorrichtung (104) verschlüsselt sind oder wobei die Verifizierungsdaten so verschlüsselt sind, dass eine andere Vorrichtung als die mobile Berechnungsvorrichtung bei dem Händler imstande ist, die Verifizierungsdaten zu entschlüsseln, und die mobile Berechnungsvorrichtung nicht imstande ist, die Verifizierungsdaten zu entschlüsseln.

14. Computerimplementiertes Verfahren, umfassend:
unter der Steuerung einer mobilen Berechnungsvorrichtung (104), die mit ausführbaren Anweisungen konfiguriert ist,
Empfangen, von einem Benutzer (102) der mobilen Berechnungsvorrichtung an einem Handelsort (106), einer Identifizierung einer Ware oder eines Dienstes (108), verfügbar von einem Händler (124) an dem Handelsort;
Empfangen einer Anweisung von dem Benutzer zum Senden, über ein Netzwerk (112), einer Kaufanforderung an eine netzwerkzugängliche Verkaufspunkt- bzw. POS-Vorrichtung (116), assoziiert mit dem Handelsort und entfernt von dem Handelsort angeordnet, die Kaufanforderung umfassend Zahlungsinformationen (120) oder eine Angabe von Zahlungsinformationen und die Identifizierung der Ware oder des Dienstes, die bzw. der von dem mit dem Handelsort assoziierten Händler verfügbar ist; und
als Reaktion auf Empfangen von Eingangsdaten von der netzwerkzugänglichen POS-Vorrichtung Bewirken der Anzeige eines Eingangs auf der mobilen Berechnungsvorrichtung, wobei die Eingangsdaten über das Netzwerk von der POS-Vorrichtung empfangen werden und angeben, dass ein mit der mobilen Berechnungsvorrichtung assoziierter Benutzer für die identifizierte Ware oder den identifizierten Dienst bezahlt hat,
wobei der Eingang, wenn er dem Händler angezeigt und durch den Händler validiert wird, darin resultiert, dass der Benutzer die Ware oder den Dienst von dem Händler empfängt,
wobei die Eingangsdaten Verifizierungsdaten enthalten, die die Authentizität der Eingangsdaten angeben, wobei die Verifizierungsdaten mindestens teilweise auf Informationen basieren, die durch den mit dem Handelsort assoziierten Händler bereitgestellt werden, und
wobei der Händler (124) einen Befehl zum Blockieren der anschließenden Präsentation der Verifizierungsdaten bereitgestellt und, mindestens teilweise als Reaktion auf den Befehl, die anschließende Präsentation der Verifizierungsdaten blockiert wird.

15. Mobile Berechnungsvorrichtung (104), konfiguriert mit ausführbaren Anweisungen zum:
Empfangen, von einem Benutzer (102) der mobilen Berechnungsvorrichtung an einem Handelsort (106), einer Identifizierung einer Ware oder eines Dienstes (108), die bzw. der von einem Händler (124) an dem Handelsort verfügbar ist;
Empfangen einer Anweisung von dem Benutzer zum Senden, über ein Netzwerk (112), einer Kaufanforderung an eine netzwerkzugängliche Verkaufspunkt- bzw. POS-Vorrichtung (116), assoziiert mit dem Handelsort oder entfernt von dem Handelsort angeordnet, die Kaufanforderung umfassend Zahlungsinformationen (120) oder eine Angabe von Zahlungsinformationen und die Identifizierung der Ware oder des Dienstes, die bzw. der von dem mit dem Handelsort assoziierten Händler verfügbar ist; und
als Reaktion auf Empfangen von Eingangsdaten von der netzwerkzugänglichen POS-Vorrichtung Bewirken der Anzeige eines Eingangs an der mobilen Berechnungsvorrichtung, wobei die Eingangsdaten über das Netzwerk von der POS-Vorrichtung empfangen werden und angeben, dass ein mit der mobilen Berechnungsvorrichtung assoziierter Benutzer die identifizierte Ware oder den identifizierten Dienst bezahlt hat,
wobei der Eingang, wenn er dem Händler angezeigt und durch den Händler validiert wird, darin resultiert, dass der Benutzer die Ware oder den Dienst von dem Händler empfängt,
wobei die Eingangsdaten Verifizierungsdaten enthalten, die die Authentizität der Eingangsdaten angeben, die Verifizierungsdaten basierend mindestens teilweise auf durch den mit dem Handelsort assoziierten Händler bereitgestellten Informationen, und
wobei der Händler (124) einen Befehl zum Blockieren der anschließenden Präsentation der Verifizierungsdaten bereitgestellt und, mindestens teilweise als Reaktion auf den Befehl, die anschließende Präsentation der Verifizierungsdaten blockiert wird.

## Revendications

1. Procédé mis en oeuvre par ordinateur comprenant :
sous la commande d'un dispositif de point de vente (POS) accessible par réseau (116) qui est associé à un emplacement de commerçant (106) mais qui est localisé à distance de l'emplacement de commerçant, le dispositif de POS accessible par réseau étant configuré avec des instructions exécutables,
la réception, au niveau du dispositif de POS accessible par réseau, d'une requête d'achat, la requête d'achat étant reçue via un réseau (112) depuis un dispositif informatique mobile (104) qui est localisé au niveau de l'emplacement de commerçant, la requête d'achat comprenant une information de paiement (120) ou une indication d'information de paiement et une identification d'un produit ou d'un service qui est disponible (108) chez un commerçant (124) qui est associé à l'emplacement de commerçant ;
en réponse à la réception de la requête d'achat, l'envoi de l'information de paiement et d'un prix qui est associé au produit ou au service à un processeur de paiement (118) ;
en réponse à la réception d'une autorisation en provenance du processeur de paiement, la génération de données de reçu qui attestent le reçu du paiement et qui identifient le produit ou le service ; et
l'envoi des données de reçu via le réseau au dispositif informatique mobile ; dans lequel :
les données de reçu, lorsqu'elles sont présentées au commerçant via le dispositif informatique mobile et qu'elles sont validées par le commerçant, conduisent au fait qu'un utilisateur qui est associé au dispositif informatique mobile reçoit le produit ou le service de la part du commerçant ; dans lequel :
les données de reçu incluent des données de vérification qui indiquent l'authenticité des données de reçu, les données de vérification étant basées au moins en partie sur une information qui est fournie par le commerçant qui est associé à l'emplacement de commerçant ; et dans lequel :
le commerçant (124) fournit une commande pour bloquer la présentation des données de vérification et, au moins partiellement en réponse à la commande, une présentation subséquente des données de vérification est bloquée.

2. Procédé tel que revendiqué selon la revendication 1, dans lequel l'identification du produit ou du service (108) comprend :
un scan, qui est généré par le dispositif informatique mobile (104), d'une étiquette (110) qui est associée au produit ou au service ;
une sélection du produit ou du service au sein d'une liste qui est présentée via le dispositif informatique mobile, ou à partir d'un code qui est entré à l'intérieur du dispositif informatique mobile ;
la requête d'achat inclut un identifiant d'utilisateur qui identifie de façon unique l'utilisateur (102) qui est associé au dispositif informatique mobile, et l'identifiant d'utilisateur est utilisé pour obtenir une information de paiement stockée au préalable (120) qui est associée à l'utilisateur pour que celui-ci paie le produit ou le service ; et
l'information de paiement comprend un numéro de carte de crédit, un numéro de carte de débit, un numéro de routage sur une banque ou un identifiant de compte prépayé d'un compte prépayé qui est associé à l'emplacement de commerçant (106).

3. Procédé tel que revendiqué selon la revendication 1, dans lequel le dispositif de POS accessible par réseau (116) est associé de façon exclusive à l'emplacement de commerçant (106) pendant une période temporelle qui est basée au moins en partie sur un volume de transactions réalisé ou estimé comme devant être réalisé au niveau de l'emplacement de commerçant pendant la période temporelle.

4. Procédé tel que revendiqué selon la revendication 1, comprenant en outre :
l'envoi des données de reçu à un dispositif informatique qui est associé au commerçant (124), dans lequel une concordance des données de reçu sur le dispositif informatique qui est associé au commerçant avec les données de reçu sur le dispositif informatique mobile (104) constitue l'attestation de paiement pour le produit ou le service (108).

5. Procédé tel que revendiqué selon la revendication 1, comprenant en outre :
la réception d'une indication d'une localisation du dispositif informatique mobile (104) ;
la comparaison de la localisation du dispositif informatique mobile avec l'emplacement de commerçant (106) ; et
en réponse à la détermination du fait que la localisation du dispositif informatique mobile est plus qu'à une distance de seuil de l'emplacement de commerçant, le fait d'empêcher que le dispositif informatique mobile ne finalise un achat du produit ou du service (108) auprès du commerçant (124) qui est associé à l'emplacement de commerçant.

6. Procédé tel que revendiqué selon la revendication 1, dans lequel le dispositif informatique mobile (104) comprend un dispositif informatique mobile qui est associé à l'utilisateur ou un dispositif informatique mobile qui est conservé par le commerçant (124) au niveau de l'emplacement de commerçant (106) et qui est destiné à être utilisé par les clients.

7. Procédé tel que revendiqué selon la revendication 1, comprenant en outre :
l'envoi, via le réseau (112), d'un problème d'authentification au dispositif informatique mobile (104), dans lequel les données de vérification restent masquées sur le dispositif mobile jusqu'à ce qu'une réponse valide au problème d'authentification soit fournie sur le dispositif informatique mobile par le commerçant (124).

8. Procédé tel que revendiqué selon la revendication 7, dans lequel une réponse valide subséquente au problème d'authentification ne génère pas une présentation subséquente des données de vérification.

9. Procédé tel que revendiqué selon la revendication 1, dans lequel les données de vérification comprennent un ou plusieurs élément(s) informationnel(s) pris parmi :
(1) des données sélectionnées au préalable par le commerçant (124) ;
(2) un texte, une image, un son, une vidéo ou une réponse hapthique ; ou
(3) un historique d'achat(s) récent(s) du commerçant, une liste de contacts du commerçant ou un graphique social de connexions du commerçant sur un ou plusieurs réseau(x) social/sociaux.

10. Procédé tel que revendiqué selon la revendication 1, dans lequel les données de vérification comprennent des données lisibles par machine qui, lorsqu'elles sont lues par un dispositif chez le commerçant (124), indiquent si les données de vérification sont valides ou invalides et dans lequel les données de vérification comprennent en outre un identifiant de transaction qui, lorsqu'il est lu par le dispositif chez le commerçant, est stocké dans un support lisible par ordinateur qui est associé au dispositif chez le commerçant de telle sorte qu'une lecture subséquente des données de vérification qui sont associées au même identifiant de transaction soit indiquée comme étant invalide par le dispositif chez le commerçant.

11. Procédé tel que revendiqué selon la revendication 1, comprenant en outre :
la réception, via le réseau (112), d'une sélection du commerçant (124), dans lequel le commerçant est sélectionné par l'utilisateur du dispositif informatique mobile (104) à partir d'une liste d'un ou de plusieurs commerçant(s) qui est présentée à l'utilisateur (102) sur le dispositif informatique mobile (104) ; et dans lequel :
chacun des un ou plusieurs commerçants qui sont inclus dans la liste des un ou plusieurs commerçants est sélectionné sur la base au moins en partie du fait qu'il présente un nom qui concorde au moins en partie avec un nom qui est entré par l'utilisateur à l'intérieur du dispositif informatique mobile ou qui est à l'intérieur d'une distance prédéfinie d'une localisation du dispositif mobile.

12. Procédé tel que revendiqué selon la revendication 1, dans lequel l'information de paiement (120) ou l'indication d'information de paiement est basée au moins en partie sur une entrée qui est fournie par l'utilisateur (102) sur le dispositif informatique mobile (104) ou sur une valeur qui est détectée par un scanner d'étiquettes du dispositif informatique mobile.

13. Procédé tel que revendiqué selon la revendication 1, dans lequel les données de vérification sont cryptées à l'aide d'une clé privée du commerçant pour leur décryptage au moyen d'une clé publique correspondante du commerçant sur le dispositif informatique mobile (104) ou dans lequel les données de vérification sont cryptées de telle sorte qu'un dispositif chez le commerçant autre que le dispositif informatique mobile dispose de la capacité de décrypter les données de vérification et de telle sorte que le dispositif informatique mobile ne dispose pas de la capacité de décrypter les données de vérification.

14. Procédé mis en oeuvre par ordinateur comprenant :
sous la commande d'un dispositif informatique mobile (104) qui est configuré avec des instructions exécutables,
la réception, en provenance d'un utilisateur (102) du dispositif informatique mobile au niveau d'un emplacement de commerçant (106), d'une identification d'un produit ou d'un service (108) qui est disponible chez un commerçant (124) au niveau de l'emplacement de commerçant ;
la réception d'une instruction en provenance de l'utilisateur pour envoyer, via un réseau (112), une requête d'achat à un dispositif de point de vente (POS) accessible par réseau (116) qui est associé à l'emplacement de commerçant et qui est localisé à distance de l'emplacement de commerçant, la requête d'achat comprenant une information de paiement (120) ou une indication d'information de paiement et l'identification du produit ou du service qui est disponible chez le commerçant qui est associé à l'emplacement de commerçant ; et
en réponse à la réception de données de reçu en provenance du dispositif de POS accessible par réseau, la génération de l'affichage d'un reçu sur le dispositif informatique mobile, les données de reçu étant reçues via le réseau depuis le dispositif de POS et indiquant qu'un utilisateur qui est associé au dispositif informatique mobile a payé le produit ou le service identifié ; dans lequel :
le reçu, lorsqu'il est affiché pour le commerçant et qu'il est validé par le commerçant, conduit au fait que l'utilisateur reçoit le produit ou le service de la part du commerçant ; dans lequel :
les données de reçu incluent des données de vérification qui indiquent l'authenticité des données de reçu, les données de vérification étant basées au moins en partie sur une information qui est fournie par le commerçant qui est associé à l'emplacement de commerçant ; et dans lequel :
le commerçant (124) fournit une commande pour bloquer une présentation subséquente des données de vérification et, au moins partiellement en réponse à la commande, une présentation subséquente des données de vérification est bloquée.

15. Dispositif informatique mobile (104) configuré avec des instructions exécutables pour :
recevoir, depuis un utilisateur (102) du dispositif informatique mobile au niveau d'un emplacement de commerçant (106), une identification d'un produit ou d'un service (108) qui est disponible chez un commerçant (124) au niveau de l'emplacement de commerçant ;
recevoir une instruction en provenance de l'utilisateur pour envoyer, via un réseau (112), une requête d'achat à un dispositif de point de vente (POS) accessible par réseau (116) qui est associé à l'emplacement de commerçant et qui est localisé à distance de l'emplacement de commerçant, la requête d'achat comprenant une information de paiement (120) ou une indication d'information de paiement et l'identification du produit ou du service qui est disponible chez le commerçant qui est associé à l'emplacement de commerçant ; et
en réponse à la réception de données de reçu en provenance du dispositif de POS accessible par réseau, la génération de l'affichage d'un reçu sur le dispositif informatique mobile, les données de reçu étant reçues via le réseau depuis le dispositif de POS et indiquant qu'un utilisateur qui est associé au dispositif informatique mobile a payé le produit ou le service identifié ; dans lequel :
le reçu, lorsqu'il est affiché pour le commerçant et qu'il est validé par le commerçant, conduit au fait que l'utilisateur reçoit le produit ou le service de la part du commerçant ; dans lequel :
les données de reçu incluent des données de vérification qui indiquent l'authenticité des données de reçu, les données de vérification étant basées au moins en partie sur une information qui est fournie par le commerçant qui est associé à l'emplacement de commerçant ; et dans lequel :
le commerçant (124) fournit une commande pour bloquer une présentation subséquente des données de vérification et, au moins partiellement en réponse à la commande, une présentation subséquente des données de vérification est bloquée.
